(19) Europäisches Patentamt
European Patent Office
Office européen des brevets

(11) **EP 2 975 425 B1**

(12) **EUROPEAN PATENT SPECIFICATION**

(45) Date of publication and mention of the grant of the patent:
**27.02.2019 Bulletin 2019/09**

(51) Int Cl.:
*G01S 5/02* *(2010.01)*       *G01S 11/02* *(2010.01)*
*G01S 11/16* *(2006.01)*

(21) Application number: **15174272.3**

(22) Date of filing: **29.06.2015**

(54) **METHOD AND SYSTEM FOR DETERMINING WHETHER DOPPLER EFFECT EXISTS**

VERFAHREN UND SYSTEM ZUR BESTIMMUNG DER ANWESENHEIT EINES DOPPLEREFFEKTS

PROCÉDÉ ET SYSTÈME PERMETTANT DE DÉTERMINER S'IL EXISTE UN EFFET DOPPLER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2014 CN 201410306752**

(43) Date of publication of application:
**20.01.2016 Bulletin 2016/03**

(73) Proprietor: **Ricoh Company, Ltd.**
**Tokyo 143-8555 (JP)**

(72) Inventors:
• **LIAO, Ke**
 **10004 Beijing (CN)**
• **YI, Hong**
 **10004 Beijing (CN)**
• **YU, Haihua**
 **10004 Beijing (CN)**
• **WANG, Wei**
 **10004 Beijing (CN)**
• **SUN, Yan**
 **10004 Beijing (CN)**

(74) Representative: **SSM Sandmair**
**Patentanwälte Rechtsanwalt**
**Partnerschaft mbB**
**Joseph-Wild-Straße 20**
**81829 München (DE)**

(56) References cited:
**US-B1- 6 445 344**

• **KUBRAK DAMIEN ET AL: "Improvement of GNSS Signal Acquisition Using Low-Cost Inertial Sensors", GNSS 2008 - PROCEEDINGS OF THE 21ST INTERNATIONAL TECHNICAL MEETING OF THE SATELLITE DIVISION OF THE INSTITUTE OF NAVIGATION (ION GNSS 2008), THE INSTITUTE OF NAVIGATION, 8551 RIXLEW LANE SUITE 360 MANASSAS, VA 20109, USA, 19 September 2008 (2008-09-19), pages 2145-2155, XP056002788,**

EP 2 975 425 B1

**Description**

BACKGROUND OF THE INVENTION

1. Field of the Invention

The present invention relates to the field of wireless communications, and particularly relates to a method and a system for determining whether the Doppler effect exists.

2. Description of the Related Art

In general, in a scenario such as a technical forum or a trade fair where people need to communicate with each other face to face, the purpose of a visitor (or a user) is to find a person sharing the same interest and to communicate with him/her face to face, so that it may be possible to, for example, catch a business opportunity. However, it is difficult for the user to find such a person among a huge number of persons. Moreover, even in a case where the user knows that there is such a person, it is also difficult to determine where he/she is. As a result, in order to achieve this kind of purpose, it is possible to utilize mobile terminals (nodes) such as smart phones.

In the conventional techniques, by adopting the Time Difference of Arrival (TDOA) algorithm, two kinds of signals having different propagation velocities may be used to calculate (or measure) the distance between sending and receipt nodes on the basis of the propagation time between the two nodes. However, in a case where there exist many nodes for simultaneously carrying out sending and receipt processes, when a receipt node receives a signal from a sending node, it may also receive a signal which is from another sending node and may negatively influence the signal from the sending node. Furthermore, the sending and receipt nodes may communicate with each other while they are in a moving state. As a result, the Doppler effect may exist between the sending and receipt nodes, thereby affecting the receipt frequency and/or the receipt time of the received signal. This may result in calculating an incorrect distance between the two nodes.

Therefore, it is necessary to provide a kind of technique, by which it is possible to accurately determine the Doppler effect, so as to be able to remove the interference caused by the signal sent from the other sending node and to be able to calculate a more accurate distance between the sending and receipt nodes.

US 6,445,344 B1 discloses a local area positioning system which includes a plurality of platforms or nodes consisting of airborne and/or ground based vehicles that are coupled in a platform-to-platform local area network. The platforms themselves establish a spatial reference system for location and communication between platforms is accomplished using directive millimeter wave beams, and where measurements and communicated estimates of node locations, in a local inertial reference frame, are processed via Kalman tracking filters to generate updated estimates of position and velocity vectors associated with each node.

Damien Kubrak et al., "Improvement of GNSS Signal Acquisition Using Low-cost Inertial Sensors", ION GNNS 21st. International Technical Meeting of the Satellite Division, 16.-19. September 2008, Savannah, GA., USA, addresses the acquisition of pilot signals using intertial sensors. A sensor-added acquisition algorithm which ails at taking benefit of an Intertial Navigation System to extend the coherent integration on pilot signals, and consequently increases the sensitivity of the receiver is presented.

SUMMARY OF THE INVENTION

According to a first aspect of the present invention, a method of determining whether the Doppler effect exists is provided. The method includes:

> an obtainment step of obtaining inertial sensor data of each of first and second mobile nodes, wherein, the first mobile node receives a first signal, the second mobile node sends the first signal, and the first signal has a sending frequency; and
> a determination step of determining, by utilizing the inertial sensor data of each of the first and second mobile nodes, whether the Doppler effect exists between the first and second mobile nodes.

According to a second aspect of the present invention, a system for determining whether the Doppler effect exists is provided. The system includes:

> an obtainment device configured to obtain inertial sensor data of each of first and second mobile nodes, wherein, the first mobile node receives a first signal, the second mobile node sends the first signal, and the first signal has a sending frequency; and

a determination device configured to determine, by utilizing the inertial sensor data of each of the first and second mobile nodes, whether the Doppler effect exists between the first and second mobile nodes.

BRIEF DESCRIPTION OF THE DRAWINGS

FIG. 1 illustrates a wireless communications environment in which the present invention may be applied;

FIG. 2 is a flowchart of a method of determining whether the Doppler effect exists, according to an embodiment of the present invention;

FIG. 3 is a block diagram of a system for determining whether the Doppler effect exists, according to an embodiment of the present invention;

FIG. 4 is a block diagram of the hardware structure of a mobile node;

FIG. 5 is a flowchart of a process of locating a mobile node;

FIG. 6 is a flowchart of a process of establishing a wireless network;

FIG. 7 is a block diagram of an assembly for encoding and decoding a node ID as well as calculating the distance between two mobile nodes by utilizing the TDOA algorithm;

FIG. 8 is a flowchart of a process of encoding and decoding a node ID by utilizing the frequency of an audio signal;

FIG. 9 illustrates a code book for encoding and decoding each bit of a node ID by utilizing different audio signal frequencies;

FIG. 10 is a flowchart of a process of measuring (calculating) the distance between two mobile nodes by utilizing the TDOA algorithm;

FIG. 11 is a flowchart of a process of compensating (correcting) the receipt frequency of an audio signal on the basis of the principle of the Doppler effect;

FIG. 12 illustrates a few types of the Doppler effect;

FIG. 13 is a flowchart of a process of determining the type of the Doppler effect;

FIG. 14 illustrates the principle of determining the type of the Doppler effect;

FIG. 15 is a flowchart of a process of conducting node ID decoding by expanding a frequency decoding tolerance;

FIG. 16 is a flowchart of a process of handling conflict shown in FIG. 15;

FIG. 17 illustrates the principle of correcting the receipt time of an audio signal (so as to be able to correct the propagation time);

FIG. 18 illustrates how to locate a mobile node by utilizing a calculated distance and an orientation angle in inertial sensor data;

FIG. 19 illustrates how to track the position of a mobile node by utilizing inertial sensor data; and

FIG. 20 is a flowchart of a process of tracking and correcting the position of a mobile node.

DETAILED DESCRIPTION OF THE PREFERRED EMBODIMENTS

In order to let those people skilled in the art better understand the present invention, hereinafter the present invention will be concretely described on the basis of the drawings and various embodiments.

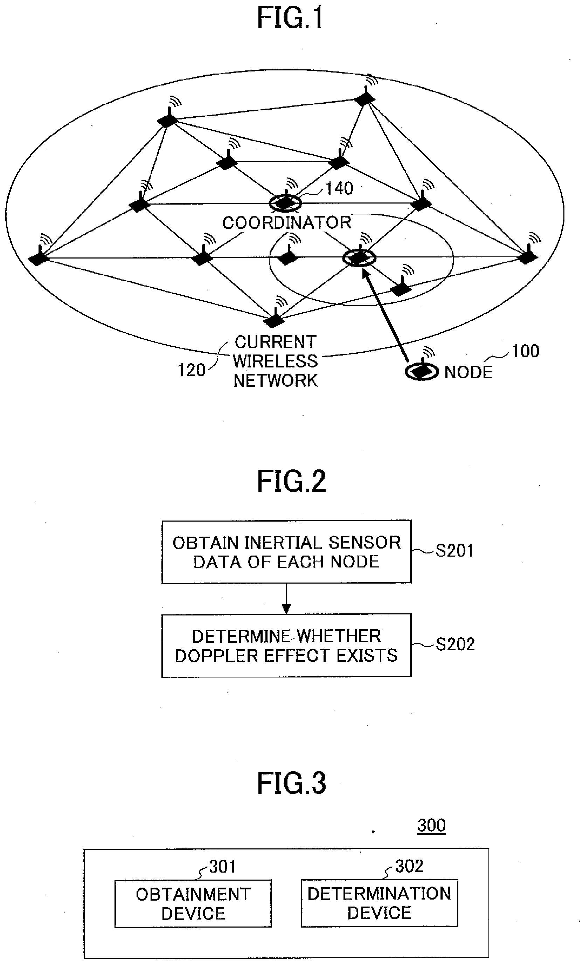

FIG. 1 illustrates a wireless communications environment in which the present invention may be applied.

As shown in FIG. 1, the wireless communications environment includes a current wireless network 120 and a coordinator 140, and the current wireless network 120 includes a number of mobile nodes 100 (in what follows, for the sake of convenience, sometimes a mobile node is also called a "node"). The embodiments of the present invention may be applied to each of the nodes 100, and may also be applied to the coordinator 140.

FIG. 2 is a flowchart of a method of determining whether the Doppler effect exists, according to an embodiment of the present invention.

As shown in FIG. 2, the method includes STEPS S201 and S202. In STEP S201, inertial sensor data of each of first and second nodes is obtained. The first node is configured to receive a first signal, the second node is configured to send the first signal, and the first signal has a sending frequency. In STEP S202, it is determined, by utilizing the inertial sensor data of each of the first and second nodes, whether the Doppler effect exists between the first and second nodes.

As is well known by those people skilled in the art, an inertial sensor of a node is a kind of sensor by which it is possible to detect and measure an acceleration, a tilt, a shock, a vibration, a rotation, and a multi-degree-of-freedom motion. It may include, for example, an accelerometer (or an acceleration transducer), an angular transducer (or a gyroscope), an inertial measurement unit (IMU) using a combination of the accelerometer and the gyroscope (sometimes also a magnetometer), and an attitude and heading reference system (AHRS) including a magnetic sensor. Hence the inertial data of an inertial sensor in a node may include, for example, the acceleration (in a very short time period, it is possible to estimate the corresponding velocity on the basis of the acceleration), the angular velocity, the attitude and heading, and the orientation angle of the node itself. By utilizing this kind of inertial data, it is possible to know information such as the acceleration, the velocity, the angular velocity, the attitude and heading, and the orientation angle of each node, so that it is possible to determine whether two nodes move in a same direction (i.e., whether the two nodes conduct same-direction movement) or in an opposite direction (i.e., whether the two nodes conduct opposite-direction movement). Moreover, in a case where it is determined that the two nodes move in the opposite direction, it is also possible to determine whether the two nodes approach or depart each other in the opposite direction (i.e., whether the two nodes conduct approach-each-other or depart-each-other movement).

In this way, by utilizing the inertial data of an inertial sensor of each node, it is possible to accurately determine whether the Doppler effect exits between the first and second nodes.

The method shown in FIG. 2 includes a step of, by utilizing the inertial sensor data of each of the first and second nodes, projecting the moving velocity of the first node onto the straight line along the moving direction of the second node; a step of, if the projected moving direction of the first node is the same as the moving direction of the second node, then determining that the Doppler effect does not exist between the two nodes; and a step of, if the projected moving direction of the first node is opposite to the moving direction of the second node, then determining that the Doppler effect exists between the two nodes.

Here it should be noted that if the projected moving direction of the first node and the moving direction of the second node are the same, that means the moving directions of the two nodes are basically the same. Furthermore, although the moving velocities of the two nodes may be different, actually each of the two nodes may be held in the hand of a user. That is to say, the moving velocity difference of the two users may not be too large. As a result, in this case, the moving directions and velocities of the two nodes may be simplified as basically equal, and on the basis of this, it is possible to simply determine that the Doppler effect does not exist between the two nodes. Of course, this is just an instance. It is also possible to more accurately determine, particularly on the basis of the moving velocities and directions of the two nodes, whether the Doppler effect exists between the two nodes. However, for the sake of convenience, its details are omitted here.

In addition, in order to determine whether the Doppler effect is an approach-each-other or depart-each-other one, STEP 202 of the method shown in FIG. 2 includes a step of, by utilizing the TDOA algorithm and on the basis of the sending times of both plural first signals and their corresponding second signals sent by the second node as well as the receipt times of both the plural first signals and their corresponding second signals at the first node in a predetermined time period, estimating the change of the distance between the two nodes in the predetermined time period, wherein, the propagation velocities of each second signal is greater than that of the corresponding first signal, and the sending time of each first signal is the same as that of the corresponding second signal; a step of, if the change of the distance is increased (for example, gradually), then determining that the Doppler effect is the depart-each-other one; and a step of, if the change of the distance is decreased (for example, gradually), then determining that the Doppler effect is the approach-each-other one.

That is to say, by sending, in a predetermined time period, a series of plural first signals and their corresponding second signals (i.e., a series of pairs of first and second signals, and each pair includes one first signal and one second signal) at the same sending time, it is possible to estimate, by utilizing the TDOA algorithm and on the basis of the sending and receipt times of the first and second signals in each pair, the distance of the two nodes at each sending time. On the basis of this, it is possible to determine, on the basis of the distance change between the two nodes in the predetermined time period, that if the distance change is increased, then the two nodes depart each other (i.e., the Doppler effect is the depart-each-other one), and if the distance change is decreased, then the two nodes approach each other (i.e., the Doppler effect is the approach-each-other one).

In this way, by utilizing the inertial data of an inertial sensor of each node, it is possible not only to determine whether the Doppler effect exits between the two nodes but also to obtain, if the Doppler effect exists, the type of the Doppler effect (i.e., the approach-each-other or depart-each-other Doppler effect).

After it is determined that the Doppler effect exists, and the type of the Doppler effect is obtained, the method shown in FIG. 2 may be applied to a few scenarios as described below.

In an example, the method may include a step of, if it is determined that the Doppler effect exists, then correcting, on the basis of the principle of the Doppler effect, the receipt frequency of the first signal. Since the Doppler effect may change the receipt frequency of the first signal, if the Doppler effect exists, and the type of the Doppler effect is obtained, then it is possible to correct, on the basis on the principle of the Doppler effect, the receipt frequency of the first signal, so as to acquire a more accurate receipt frequency. For instance, the sending frequency (or called an "encoding frequency") of the first signal may be used for encoding a piece of information, and the receipt frequency (or called a "decoding frequency") of the first signal may be used for decoding the piece of information. In a case where different sending frequencies are used for encoding different pieces of information (e.g., 8 Hz refers to a first piece of information that is also called "information 1", and 4 Hz refers to a second piece of information that is also called "information 0"), if the receipt frequency of the first signal at the receipt node is 8 Hz, then it is possible to decode the corresponding piece of information so as to be able to accurately determine the corresponding piece of information as information 1. However, since the Doppler effect exists, the receipt frequency of the first signal may become larger or smaller (e.g., the depart-each-other Doppler effect may change the receipt frequency from 8 Hz to 4 Hz), an incorrect piece of information may be obtained (e.g., the corresponding piece of information may be incorrectly decoded as information 0). As a result, by correcting the receipt frequency of the first signal on the basis of the principle of the Doppler effect so as to obtain a more accurate receipt frequency, it is possible to get a more accurate decoded result.

In an example, if it is determined that the Doppler effect exists, then it is possible to correct, on the basis of the principle of the Doppler effect, the distance which is between the first and second nodes and is calculated by utilizing the TDOA algorithm. Since the Doppler effect may change the travelled distance of the first signal from the sending node (i.e., the second node) to the receipt node (i.e., the first node), the receipt time (i.e., the arrival time) of the first signal at the receipt node may be incorrect. As a result, by utilizing the principle of the Doppler effect, it is possible to correct this kind of incorrect receipt time, so as to be able to obtain a more accurate propagation time between the two nodes. In this way, when calculating the distance between the two nodes by utilizing the TDOA algorithm, it is possible to acquire a more accurate result.

In an example, if there exist many sending and receipt nodes as described in the Description of the Related Art, then a receipt signal of the first node may be not from the second node. In this case, it is possible to solve this kind of problem by adopting the following process. First the first node receives first and second signals which are simultaneously sent by the second node, and the propagation velocity of the second signal is greater than that of the first signal. In addition, the first and second signals carry the ID of the second node (also called an "ID" or "node ID"), and in the first signal, different sending frequencies are used for encoding the different bits of the node ID. After that, if it is determined as described above that the Doppler effect exists, then the receipt frequencies of the first signal are corrected on the basis of the principle of the Doppler effect. Next the node ID carried in the first signal is decoded by utilizing the corrected receipt frequencies of the first signal, and the node ID carried in the second signal is also decoded. After that, it is determined whether the decoded node ID from the first signal matches (i.e., is the same as) the decoded node ID from the second signal.

If it is determined that the two decoded node IDs match each other, then the distance between the first and second nodes is calculated by utilizing the receipt times and propagation velocities of the first and second signals. Here it should be noted that the receipt time of the first signal is corrected on the basis of the principle of the Doppler effect, so that the propagation time of the first signal is corrected. Since the Doppler effect may change the travelled distance of the first signal from the sending node (i.e., the second node) to the receipt node (i.e., the first node), the receipt time of the first signal at the receipt node may be incorrect. As a result, by utilizing the principle of the Doppler effect, it is possible to correct this kind of incorrect receipt time of the first signal, so as to correct the propagation time of the first signal between the two nodes. In this way, when calculating the distance between the two nodes by utilizing the TDOA algorithm, it is possible to acquire a more accurate result.

On the other hand, after correcting the receipt frequencies of the first signal by utilizing the principle of the Doppler effect, i.e., after decoding the node ID carried in the first signal on the basis of the corrected receipt frequencies of the first signal, if it is still determined that the decoded node ID from the first signal does not match the decoded node ID from the second signal, then it is possible to further decode the node ID carried in the first signal by adopting the following process. First the frequency decoding tolerance bandwidth of the first signal is expanded so as to obtain a few decoded node IDs from the first signal. After that, the decoded node IDs obtained from the first signal after expanding the frequency decoding tolerance bandwidth of the first signal are compared with the decoded node ID from the second signal. If there exists at least one in the decoded node IDs obtained from the first signal, which matches the decoded node ID from the second signal, then it may be determined that the node ID carried in the first signal matches the node ID carried in the second signal. And if there does not exist one in the decoded node IDs obtained from the first signal, which matches the decoded node ID from the second signal, then it is possible to cause the second node to resend a first signal carrying a node ID encoded by utilizing the sending frequencies of the first signal.

In this way, it is possible to acquire a few decoded results of the node ID from the first signal by expanding the frequency decoding tolerance bandwidth of the first signal. For instance, in a case where the decoded node ID obtained from the first signal is 12 after the receipt frequencies of the first signal are corrected, if the node ID carried in the second signal is 13, then it is obvious that the two node IDs do not match each other. In this case, if a few decoded node IDs from the first signal, for example, 11, 12, and 13 are obtained after expanding the frequency decoding tolerance bandwidth of the first signal, that means one of the decoded node IDs, that is 13, matches the node ID carried in the second signal. As a result, it is possible to determine that the node IDs carried in the first and second signals match each other. Since there exists the Doppler effect or other possible interference, it is impossible to determine that the receipt frequencies corrected on the basis of the principle of the Doppler effect as described above must be most accurate. However, by properly expanding the frequency decoding tolerance bandwidth of the first signal, it is possible to get a decoded node ID from the first signal, which is as correct as possible. Therefore, in this way, it is possible to acquire a matched node ID from the first signal so as to be able to determine that the received first and second signals are sent from the same sending node (i.e., the second node), so that it is possible to conduct the follow-on TDOA based distance calculation (or distance measurement).

On the other hand, if there does not exist one in the decoded node IDs obtained from the first signal, which matches the node ID carried in the second signal, then it is possible to cause the second node to resend a first signal carrying a node ID encoded by utilizing the sending frequency of the first signal. In this case, since it is still impossible to get a matched node ID after expanding the frequency decoding tolerance bandwidth of the first signal, that means the received signal is completely incorrect.

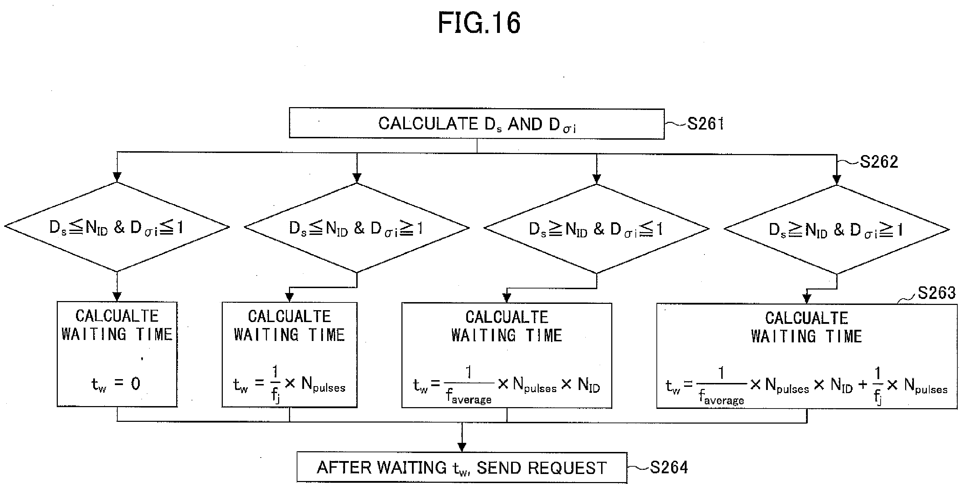

For this reason, in an example, it is possible to determine, by utilizing the following process, how long is necessary to wait for causing the second node to resend the first signal so as to be able to accurately receive it. Here it should be noted that for more information, it is also possible to see an example described below by referring to FIG. 16.

First the sum of the absolute differences of mismatching node IDs and the absolute differences of the differences between mismatching bits are calculated. If the sum is less than or equal to $N_{ID}$, and the absolute differences are less than or equal to 1, then, after $t_w=0$, it is possible to cause the second node to resend a first signal carrying a node ID encoded by utilizing the sending frequency of the first signal. If the sum is less than or equal to $N_{ID}$, and the absolute differences are greater than 1, then after $t_w=(1/f_j)\times N_{pulses}$, it is possible to cause the second node to resend a first signal carrying a node ID encoded by utilizing the sending frequency of the first signal. If the sum is greater than $N_{ID}$, and the absolute differences are less than or equal to 1, then after $t_w=(1/(\sum_i f_i/N_{ID}))\times N_{pulses}\times N_{ID})$, it is possible to cause the second node to resend a first signal carrying a node ID encoded by the sending frequency of the first signal. If the sum is greater than $N_{ID}$, and the absolute differences are greater than 1, then after $t_w=(1/(\sum_i f_i/N_{ID}))\times N_{pulses}\times N_{ID}+(1/f_j)\times N_{pulses})$, it is possible to cause the second node to resend a first signal carrying a node ID encoded by utilizing the sending frequency of the first signal. Here, $t_w$ refers to a waiting time; $f_i$ refers to the receipt frequency of a first signal; $f_j$ refers to the receipt frequency of the first signal whose relevant absolute difference in the absolute differences is maximum; $N_{pulses}$ refers to the number of pulses of the first signal related to each encoding frequency (i.e., each sending frequency); and $N_{ID}$ refers to the number of bits of the node ID.

Of course, the above-described determination conditions and waiting times are just examples. Actually the principle of setting the above-described determination conditions and waiting times is estimating, according to the distribution and trends of the mismatching bits between the decoded node IDs from the first and second signals, that the trend of this kind of mismatched node ID of the first signal is one of the following four types, i.e., approaching a real signal and including a small amount of noise, approaching a real signal and including a large amount of noise, not approaching a real signal and including a small amount of noise, or not approaching a real signal and including a large amount of noise. As a result, on the basis of the four types of trend, it is also possible to design other determination conditions and waiting times.

In an example, the first signal may be an audio signal, and the second signal may be a radio signal. It is apparent that the propagation velocity of the audio signal is less than that of the radio signal. Since the propagation velocity of the radio signal is very fast, at sending and receipt nodes, the error of time and the error of decoding are relatively small. As a result, it is possible to let the sending time of the radio signal serve as a sending time criterion of the TDOA algorithm. And at the same time, it is also possible to let the decoded node ID obtained from the radio signal serve as a node ID criterion so as to conduct matching with the decoded node ID obtained from the audio signal.

In an example, the method shown in FIG. 2 may further include a step of, by utilizing the inertial sensor data of each of the first and second nodes, obtaining the orientation angle between the two nodes; and a step of, on the basis of the orientation angle and the measured distance between the two nodes, locating the first node. In other words, after measuring a more accurate distance between the first and second nodes, it is possible to, on the basis of the more accurate distance and the orientation angle information in the inertial sensor data, locate the first node.

In an example, the method shown in FIG. 2 may further include a step of obtaining the inertial sensor data of each of third and fourth nodes; a step of, by utilizing the TDOA algorithm and on the basis of the inertial sensor data of each of the first and third nodes, measuring the distance between the first and third nodes; a step of, by utilizing the TDOA algorithm and on the basis of the inertial sensor data of each of the first and fourth nodes, calculating the distance between the first and fourth nodes; and a step of, on the basis of the three distances between the first node and the second, third, and fourth nodes, locating the first node. In other words, it is possible to calculate three more accurate distances related to the first node, so as to locate the first node by utilizing a trilateration algorithm or any other approach using the three more accurate distances.

In an example, if it is determined that the Doppler effect exists, then correcting, on the basis of the principle of the Doppler effect, the distance between the first and second nodes by utilizing the TDOA algorithm may further include the following process. If the sending start time $T_1$ of a first audio signal having a frequency $f_1$ (i.e., a sending or encoding frequency) at the first node serves as the sending timing point, and the receipt start time $t_1$ of the first audio signal having a frequency $f_1'$ (i.e., a receipt or decoding frequency) at the second node serves as the receipt timing point, then the propagation time of the first audio signal from the first node to the second node is corrected to $\Delta T=t_1-T_1=t_1-T_0=t_1-0=t_1$. Here, it is assumed that $T_1=T_0=0$. If an intermediate time $T_1$ of sending the first audio signal having the frequency $f_1$ at

the first node serves as the sending timing point, and an intermediate time $t_1$ of receiving the first audio signal having the frequency $f_1'$ at the second node serves as the receipt timing point, then the propagation time of the first audio signal from the first node to the second node is corrected to $\Delta T=t_1-T_1=t_1-[((1/f_1)+(1/f_1'))\times n_{pulses}]$. If the sending end time $T_1$ of the first audio signal having the frequency $f_1$ (i.e., the time point immediately after sending $N_{pulses}$ (e.g., eight) pules) at the first node serves as the sending timing point, and the receipt end time $t_1$ of the first audio signal having the frequency f1' at the second node serves as the receipt timing point, then the propagation time of the first audio signal from the first node to the second node is corrected to $\Delta T=t_1-T_1=t_1-[((1/f_1)+(1/f_1'))\times N_{pulses}]$. If the sending start time $T_2$ of a second audio signal at the first node serves as the sending timing point, and a receipt start time $t_2$ the second audio signal at the second node serves as the receipt timing point, then the propagation time of the second signal from the first node to the second node is corrected to $\Delta T=t_2-T_2=t_2-(T_1+(1/f_1)\times N_{pulses})=t_2-(1/f_1)\times n_{pulses}$. Here, $f_1$ refers to the sending frequency of the first audio signal, $f_1'$ refers to the receipt frequency of the first signal, and so on. In such a way, if an intermediate time $T_2$ of sending the second audio signal at the first node serves as the sending timing point, and an intermediate time $t_2$ of receiving the second audio signal at the second node serves as the receipt timing point, then the propagation time of the second audio signal from the first node to the second node is corrected to $\Delta T=t_2-T_2=(t_2-(1/f_2')\times n_{pulses})-(T_1+(1/f_1)\times N_{pulses}+(1/f_2)\times n_{pulses})=t_2-[(1/f_1)\times N_{pulses}+((1/f_2)+(1/f_2'))\times n_{pulses}]$. If an intermediate time $T_2$ of sending the second audio signal at the first node serves as the sending timing point, and the receipt end time $t_2$ of the second audio signal at the second node serves as the receipt timing point, then the propagation time of the second audio signal from the first node to the second node is corrected to $\Delta T=t_2-T_2=(t_2-(1/f_2')\times N_{pulses})-(T_1+(1/f_1)\times N_{pulses}+(1/f_2)\times N_{pulses})=t_2-[(1/f_1)\times N_{pulses}+((1/f_2)+(1/f_2'))\times N_{pulses}]$. Here, $f_2$ refers to the sending frequency of the second audio signal, $f_2'$ refers to the receipt frequency of the second audio signal, and so on.

To sum up, this kind of propagation time correction may be summarized as follows.

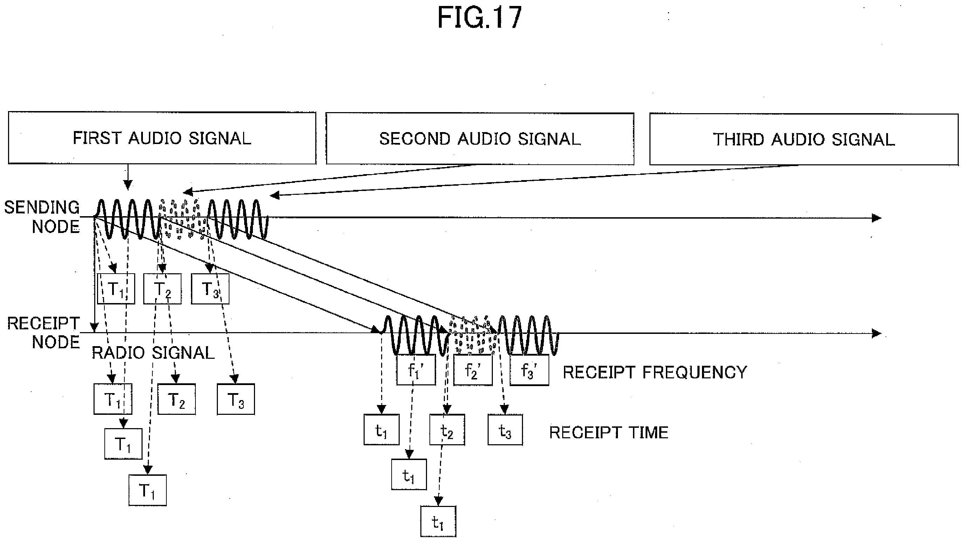

If a sending time $T_K$ of a K-th audio signal at the first node serves as the sending timing point, and an intermediate receipt time $t_K$ of the K-th audio signal at the second node serves as the receipt timing point, then the propagation time of the K-th audio signal from the first node to the second node is corrected to $\Delta T=t_K-T_k=(t_K-(1/f_K')\times n_{pulses})-(T_1+\Sigma_1^{(K-1)}((1/f_i)\times N_{pulses})+(1/f_K)\times n_{pulses})=t_K-[\Sigma_1^{(K-1)}((1/f_1)\times N_{pulses})+((1/f_K)+(1/f_K'))\times n_{pulses}]$. Here, $f_i$ refers to the sending frequency of a i-th audio signal; i refers to a positive integer less than K; $f_K$ refers to the sending frequency of the K-th audio signal; $f_K'$ refers to the receipt frequency of the K-th audio signal; K refers to a positive integer; $n_{pulses}$ refers to the number of pulses of each encoding frequency related audio signal, which have been sent from the sending time; and $N_{pulses}$ refers to the (total) number of pulses of each encoding frequency related audio signal. In this example, for instance, $N_{pulses}$ is eight, and $0\leq n_{pulses}\leq N_{pulses}$. If $n_{pulses}=0$, that means the sending timing point is the sending start time of the K-th audio signal at the first node. If $n_{pulses}=N_{pulses}$, that means the sending timing point is the sending end time of the K-th audio signal at the first node. If $0<n_{pulses}<N_{pulses}$, that means the sending timing point is an intermediate time of sending the K-th audio signal at the first node. Here it should be noted that for more information, it is also possible to see an example described below by referring to FIG. 17.

As a result, after conducting the propagation time correction as described above, it is possible to more accurately calculate the distance between the first and second nodes.

In an example, the method shown in FIG. 2 may further include a process of, after locating the first node, tracking, by utilizing the inertial sensor data of the first node, the position of the first node. In this way, by utilizing the inertial sensor data such as an acceleration (and a moving velocity obtained on the basis of the acceleration), an angular velocity, and attitude and heading, it is possible to know the current trend (state) of the first node so as to be able to predict the position of the first node in the next time period, so that it is possible to track the position of the first node. Of course, after tracking the first node for a while, an offset may occur between the tracked position and the actual position of the first node. At this time, it is possible to again conduct the above-described distance calculation and localization (i.e., locating the first node) so as to reset the current position of the first node.

As a result, by utilizing the inertial data of the inertial sensor of each of first and second nodes, it is possible to accurately determine whether the Doppler effect exists between the two nodes, so that it is possible to further utilize the principle of the Doppler effect to carry out various applications (processes) such as compensating (or correcting) the receipt frequency of a first signal (i.e., an audio signal) and compensating (or correcting) the propagation time of the first signal between the two nodes. In this way, it is possible to obtain a more accurate ID decoding result, a more accurate ID matching result, a more accurate distance calculation result, etc. In addition, in this embodiment, it is possible to properly expand the frequency decoding tolerance bandwidth of the first signal so as to be able to obtain a decoding result as matched as possible. And it is also possible to, by analyzing the distribution and trends of the mismatching bits of two decoded node IDs, further design determination conditions and corresponding waiting times for resending the first signal, so as to be able to more accurately receive the first signal without interference at the next time.

FIG. 3 is a block diagram of a system for determining whether the Doppler effect exists, according to an embodiment of the present invention.

As shown in FIG. 3, a system 300, which is used for determining whether the Doppler effect exists, includes an obtainment device 301 and a determination device 302. The obtainment device 301 is configured to obtain inertial sensor data of each of first and second nodes. The first node is configured to receive a first signal, the second node is configured to send the first signal, and the first signal has a sending frequency (or called a "encoding frequency"). The determination device 302 is configured to, by utilizing the inertial sensor data of each of the first and second nodes, determine whether the Doppler effect exists between the first and second nodes.

In this way, by utilizing the inertial data of an inertial sensor in each of the first and second nodes, it is possible to accurately determine whether the Doppler effect exists between the first and second nodes.

The determination device 302 is configured to conduct the following steps, namely, utilizing the inertial sensor data of each of the first and second nodes so as to project the moving velocity of the first node onto the straight line along the moving direction of the second node; determining, if the projected moving direction of the first node conforms with the moving direction of the second node, that the Doppler effect does not exist between the two nodes; and determining, if the projected moving direction of the first node is opposite of the moving direction of the second node, that the Doppler effect exists between the two nodes.

In order to determine whether the Doppler effect is an approach-each-other or depart-each-other one, the determination device 302 is further configured to conduct the following steps, namely, estimating, on the basis of the sending times of plural first signals and their corresponding second signals sent by the second node and the receipt times of the plural first signals and their corresponding second signals at the first node in a predetermined time period, the distance change between the first and second nodes in the predetermined time period by utilizing the TDOA algorithm (here, the propagation velocity of each first signal is less than that of the corresponding second signal, and the sending time of each first signal is the same as that of the corresponding second signal); determining, if the distance change is increasing (e.g., gradually), that the Doppler effect is the depart-each-other one; and determining, if the distance change is decreasing (e.g., gradually), that the Doppler effect is the approach-each-other one.

In this way, after it is determined that the Doppler effect exists between the first and second nodes, by utilizing the inertial sensor data of each of the first and second nodes, it is also possible to determine the type of the Doppler effect.

After it is determined that the Doppler effect exists, and the type of the Doppler effect is obtained, it is possible to apply the related results to a few scenarios as described below.

In an example, the system 300 may further include a device which is configured to, if it is determined that the Doppler effect exists, correct the receipt frequency of the first signal on the basis of the principle of the Doppler effect. Since the Doppler effect may change the receipt frequency of the first signal at the first node, if it is determined that the Doppler effect exists, and the type of the Doppler effect is obtained, then it is possible to correct the receipt frequency of the first signal so as to acquire a more accurate receipt frequency of the first signal at the first node. For instance, the sending frequency of the first signal may be used for encoding a piece of information, and the receipt frequency of the first signal may be utilized for decoding the piece of information. If it is possible to get a more accurate receipt frequency of the first signal by conducting the above correction, then it is possible to acquire a more accurate decoding result at the first node.

In an example, the system 300 may further include a device which is configured to, on the basis of the principle of the Doppler effect, correct the distance between the first and second nodes measured by utilizing the TDOA algorithm. Here, since the Doppler effect may change the propagation distance of the first signal between the first and second nodes, the receipt time of the first signal at the first node may be incorrect. As a result, by utilizing the principle of the Doppler effect, it is possible to correct this kind of incorrect receipt time so as to obtain a more accurate propagation time of the first signal, so that when measuring the distance between the first and second nodes by utilizing the TDOA algorithm, it is possible to calculate a more accurate result.

In an example, in a case where there exist many sending and receipt nodes as described in the Description of the Related Art, the receipt signal at the first node may be not sent from the second node. In this case, the system 300 may further include a device configured to receive, at the first node, first and second signals simultaneously sent from the second node (here, the propagation velocity of the first signal is less than that of the second signal, each of the first and second signals carries the ID of the second node (also called an "ID" or a "node ID"), and in the first signal, different frequencies are used to encode the different bits of the node ID); a device configured to, if it is determined that the Doppler effect exits, correct the receipt frequencies of the first signal on the basis of the principle of the Doppler effect; a device configured to decode the ID carried in the first signal by utilizing the corrected receipt frequencies of the first signal; a device configured to decode the ID carried in the second signal; and a device configured to determine whether the decoded ID from the first signal matches (i.e., is the same as) the decoded ID from the second signal.

If it is determined that the decoded ID from the first signal matches the decoded ID from the second signal, then on the basis of the receipt times and propagation velocities of the first and second signals, it is possible to calculate the distance between the first and second nodes. Here, the receipt time of the first signal is corrected on the basis of the principle of the Doppler effect, so that the propagation time of the first signal is compensated. In general, since the Doppler effect may change the propagation distance of the first signal from its sending node to its receipt node, the receipt time of the first signal may become incorrect. As a result, on the basis of the principle of the Doppler effect, it is possible to correct this kind of incorrect receipt time, so that it is possible to, when calculating the distance between the first and second nodes by utilizing the TDOA algorithm, obtain a more accurate result.

After correcting the receipt frequencies of the first signal on the basis of the principle of the Doppler effect and decoding the ID carried in the first signal on the basis of the corrected receipt frequencies of the first signal, if it is still determined that the decoded IDs from the first and second signals do not match each other, then the system 300 may further include a device which is used to further decode the ID carried in the first signal. The device is configured to expand the frequency decoding tolerance bandwidth of the first signal so as to obtain plural decoded results of the ID from the first signal. After the plural decoded results of the ID are obtained from the first signal, they are compared with the ID decoded from the second signal received at the first node. If there is one of the plural decoded results of the ID, which matches the ID decoded from the second signal, then it is possible to determine that the ID carried in the first signal matches the ID carried in the second signal. If there is not one of the plural decoded results of the ID obtained from the first signal, which matches the ID decoded from the second signal, then it is possible to cause the second node to resend a first signal carrying the ID encoded by using the sending frequency of the first signal.

In this way, by expanding the frequency decoding tolerance bandwidth of the first signal, it is possible to obtain plural decoded results of the ID from the first signal. Since there exists the Doppler effect, it cannot be determined that the receipt frequency corrected on the basis of the principle of the Doppler effect as described above must be most accurate. As a result, by properly expanding the frequency decoding tolerance bandwidth of the first signal, it is possible to acquire a decoded ID as correct as possible from the first signal. On the basis of this, it is possible to get a decoded ID as matched as possible from the first signal so as to be able to determine that the first and second signal are sent from the same second node, so that it is possible to carry out the follow-on TDOA based distance calculation (i.e., distance measurement).

On the other hand, if there is not one of the plural decoded results of the ID, which matches the decoded ID from the second signal, then the system 300 may further include a device configured to cause the second node to resend a first signal carrying the ID encoded by utilizing the sending frequency of the first signal. Since this case means that the received first signal is completely wrong, in order to be able to receive a correct first signal, in an example, the device for causing the second node to resend the first signal may be configured to let the second node resend the first signal after a waiting time determined as follows.

The sum of the absolute differences of the mismatching IDs and the absolute differences of the differences of the mismatching digits in the IDs are calculated. If the sum is less than or equal to $N_{ID}$, and the absolute differences are less than or equal to 1, then after $t_W=0$, the device causes the second node to resend the first signal. If the sum is less than or equal to $N_{ID}$, and the absolute differences are greater than 1, then after $t_W=(1/f_i)\times N_{pulses}$, the device causes the second node to resend the first signal. If the sum is greater than $N_{ID}$, and the absolute differences are less than or equal to 1, then after $t_W=(1/(\sum_i f_i/N_{ID}))\times N_{pulses}\times N_{ID}$, the device causes the second node to resend the first signal. If the sum is greater than $N_{ID}$, and the absolute difference is greater than 1, then after $t_W=(1/(\sum_i f_i/N_{ID}))\times N_{pulses}\times N_{ID}+(1/f_j)\times N_{pulses}$, the device causes the second node to resend the first signal. Here, $t_w$ refers to a waiting time; $f_i$ refers to the receipt frequency of a first signal; $f_j$ refers to the receipt frequency of a first signal corresponding to the maximum one of the absolute differences; $N_{pulses}$ refers to the (total) number of pulses of a first signal related to each decoding frequency; and $N_{ID}$ refers to the number of bits of the node ID.

In an example, the first signal may be an audio signal, and the second signal may be a radio signal. It is obvious that the propagation velocity of the audio signal is slower than that of the radio signal, and the propagation velocity of the radio signal is very fast. As a result, in a case of the radio signal, at the first and second nodes, the time error and the decoding result error are relatively small. That is to say, it is possible to let the sending time of the radio signal serve as a standard sending time for conducting the TDOA algorithm, and at the same time, it is also possible to let the decoded ID from the radio signal serve as a standard ID for carrying out matching with the decoded ID from the audio signal.

In an example, the system 300 may further include a device configured to utilize the inertial sensor data of each of the first and second nodes so as to obtain the orientation angle between the first and second nodes; and a device configured to, on the basis of the orientation angle and the calculated distance between the first and second nodes, locate the position of the first node. In other words, after obtaining a more accurate distance between the first and second nodes as done above, it is possible to, by utilizing the more accurate distance and the orientation angle information in the inertial sensor data, locate the first node.

In an example, the system 300 may further include a device configured to obtain the inertial sensor data of each of third and fourth nodes; a device configured to, on the basis of the inertia sensor data of each of the first and third nodes, calculate the distance between the first and third nodes by utilizing the TDOA algorithm; a device configured to, on the basis of the inertial sensor data of each of the first and fourth nodes, calculate the distance between the first and fourth nodes by utilizing the TDOA algorithm; and a device configured to, on the basis of the three distances between the first node and the second, third, and fourth nodes, locate the first node. In other words, it is possible to use the three distances, which are more accurately calculated as done above, so as to locate the first node by utilizing a trilateration algorithm or any other approach using the three distances.

In an example, the device, which is configured to, if it is determined that the Doppler effect exists, correct the distance between the first and second nodes on the basis of the principle of the Doppler effect, may be further configured as follows.

If the sending start time $T_1$ of a first audio signal having a sending frequency $f_1$ at the first node serves as the sending timing point, and the receipt start time $t_1$ of the first audio signal having a receipt frequency $f_1'$ at the second node serves as the receipt timing point, then the propagation time of the first audio signal from the first node to the second node is corrected to $\Delta T = t_1 - T_1 = t_1 - T_0 = t_1 - 0 = t_1$. Here, it is assumed that $T_1 = T_0 = 0$. If an intermediate time $T_1$ of sending the first audio signal having the sending frequency $f_1$ at the first node serves as the sending timing point, and an intermediate time $t_1$ of receiving the first audio signal having the receipt frequency $f_1'$ at the second node serves as the receipt timing point, then the propagation time of the first audio signal from the first node to the second node is corrected to $\Delta T = t_1 - T_1 = t_1 - [((1/f_1) + (1/f_1')) \times n_{pulses}]$. If the sending end time of the first audio signal having the sending frequency $f_1$ at the first node (i.e., the time point immediately after $N_{pulses}$ pulses are sent) serve as the sending timing point, and the receipt end time $t_1$ of the first audio signal having the receipt frequency $f_1'$ at the second node serves as the receipt timing point, then the propagation time of the first audio signal from the first node to the second node is corrected to $\Delta T = t_1 - T_1 = t_1 - [((1/f_1) + (1/f_1')) \times N_{pulses}]$. If the sending start time $T_2$ of a second audio signal at the first node serves as the sending timing point, and the receipt start time $t_2$ of the second audio signal at the second node serves as the receipt timing point, then the propagation time of the second audio signal from the first node to the second node is corrected to $\Delta T = t_2 - T_2 = t_2 - (T_1 + (1/f_1) \times N_{pulses}) = t_2 - (1/f_1) \times N_{pulses}$. Here, $f_1$ refers to the sending frequency of the first audio frequency; $f_1'$ refers to the receipt frequency of the first audio signal; and so on. In like manner, if an intermediate time $T_2$ of sending the second audio signal at the first node serves as the sending timing point, and an intermediate time $t_2$ of receiving the second audio signal at the second node serves as the receipt timing point, then the propagation time of the second audio signal from the first node to the second node is corrected to $\Delta T = t_2 - T_2 = (t_2 - (1/f_2') \times n_{pulses}) - (T_1 + (1/f_1) \times N_{pulses} + (1/f_2) \times n_{pulses}) = t_2 - [(1/f_1) \times N_{pulses} + ((1/f_2) + (1/f_2')) \times n_{pulses}]$. If the sending end time $T_2$ of the second audio signal at the first node serves as the sending timing point, and the receipt end time $t_2$ of the second audio signal at the second node serves as the receipt timing point, the propagation time of the second audio signal from the first node to the second node is corrected to $\Delta T = t_2 - T_2 = (t_2 - (1/f_2') \times N_{pulses}) - (T_1 + (1/f_1) \times N_{pulses} + (1/f_2) \times N_{pulses}) = t_2 - [(1/f_1) \times N_{puises} + ((1/f_2) + (1/f_2')) \times N_{pulses}]$. Here, $f_2$ refers to the sending frequency of the second audio signal; $f_2'$ refers to the receipt frequency of the second audio signal; and so on.

To sum up, this kind of propagation time correction may be summarized as follows.

If a sending time $T_K$ of sending a K-th audio signal from the first node serves as the sending timing point, and an intermediate time $t_K$ of receiving the K-th audio signal at the second node serves as the receipt timing point, then the propagation time of the K-th audio signal from the first node to the second node is corrected to $\Delta T = t_K - T_K = (t_K - (1/f_k') \times n_{pulses}) - (T_1 + \sum_1^{(K-1)}((1/f_i) \times N_{pulses}) + (1/f_K) \times n_{pulses}) = t_K - [\sum_1^{(K-1)}((1/f_i) \times N_{pulses}) + ((1/f_K) + (1/f_K')) \times n_{pulses}]$. Here, $f_i$ refers to the sending frequency of an i-th audio signal, and i refers to a positive integer less than K; $f_K$ refers to the sending frequency of the K-th audio signal, $f_K'$ refers to the receipt frequency of the K-th audio signal, and K refers to a positive integer; $n_{pulses}$ refers to the number of pulses of each encoding frequency related audio signal, which have been sent from the sending time; and $N_{pulses}$ refers to the (total) number of pulses of each encoding frequency related audio signal. In this example, for instance, $N_{pulses} = 8$, and $0 \leq n_{pulses} \leq N_{pulses}$. If $n_{pulses} = 0$, then the sending timing point is the sending start time of the K-th audio signal at the first node. If $n_{pulses} = N_{pulses}$, then the sending timing point is the sending end time of the K-th audio signal at the first node. If $0 < n_{pulses} < N_{pulses}$, then the sending timing point is an intermediate time of sending the K-th audio signal at the first node.

In an example, the system 300 may further include a device configured to, after locating the first node, utilizing the inertial sensor data of the first node so as to track the position of the first node. In this way, by utilizing the inertial sensor data such as an acceleration (and a moving velocity obtained on the basis of the acceleration), an angular velocity, and attitude and heading, it is possible to know the current trend (state) of the first node so as to be able to estimate the position of the first node in the next time period, so that it is possible to track the position of the first node. Of course, after tracking the first node for a while, an offset may occur between the tracked position and the actual position of the first node. At this time, it is possible to again conduct the above-described distance calculation and localization (positioning) so as to reset the current position of the first node.

As a result, by utilizing the inertial data of the inertial sensor of each of two nodes, it is possible to accurately determine whether there exists the Doppler effect between the two nodes, so that it is possible to further utilize the principle of the Doppler effect to carry out various applications (processes) such as compensating (or correcting) the receipt frequency of a first signal and compensating (or correcting) the propagation time of the first signal between the two nodes. In this way, it is possible to obtain a more accurate ID decoding result, a more accurate ID matching result, a more accurate distance calculation result, etc. In addition, in this embodiment, it is also possible to properly expand the frequency decoding tolerance bandwidth of the first signal so as to obtain a decoding result as matched as possible. And it is also possible to, by analyzing the distribution and trends of the mismatching bits in the decoded IDs, further design determination conditions and corresponding waiting times for resending a first signal, so as to be able to more accurately receive the first signal without interference at the next time.

In what follows, some examples will be given for concretely illustrating the present invention. Here it should be noted that in the following examples, the first signal is an audio signal, and the second signal is a radio signal. However, the present invention is not limited to this.

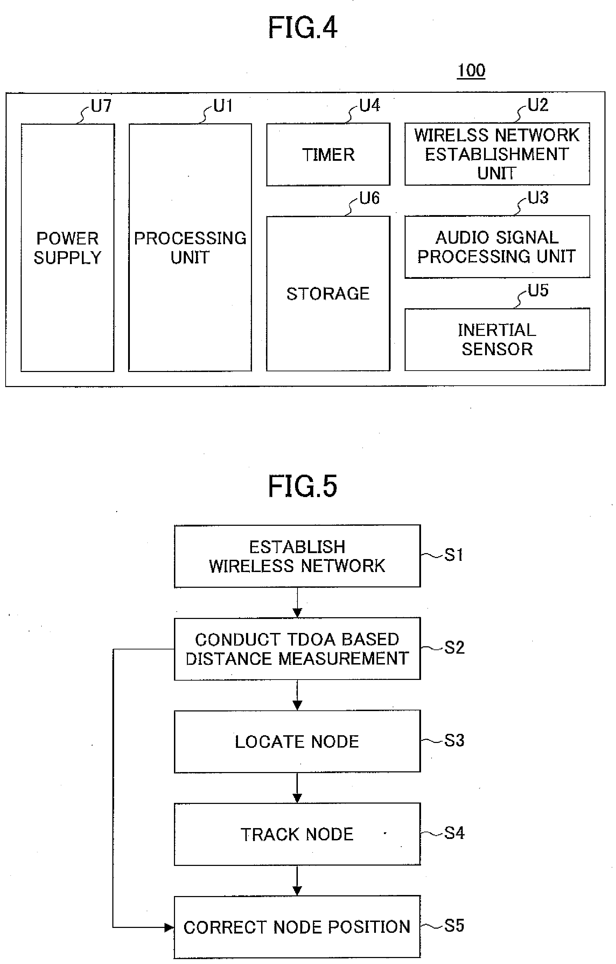

FIG. 4 is a block diagram of the hardware structure of a mobile node.

As shown in FIG. 4, a mobile node 100 includes at least a processing unit U1, a wireless network establishment unit U2, an audio signal processing unit U3, a timer U4, an inertial sensor U5, a storage U6, and a power supply U7. The processing unit U1 is configured to control the behavior of the mobile node 100. The wireless network establishment unit U2 is configured to establish a wireless network. A radio signal sent from the wireless network establishment unit U2 serves as a kind of signal used in the TDOA based distance calculation, and an audio signal sent from the audio signal processing unit U3 serves as another kind of signal used in the TDOA based distance calculation. The timer U4 is configured to record the receipt (or arrival) time of each signal so as to conduct the TDOA based distance measurement (calculation). The inertial sensor U5 is configured to collect inertial sensor data so as to achieve the Doppler effect determination by which it is possible to perform signal frequency correction, receipt time or propagation time correction, and/or localization (positioning). The storage U6 is configured to store data for various processes, for example, a node ID, the inertial sensor data, and the receipt (or arrival) time of each signal. The power supply U7 is configured to provide electrical power.

Of course, the above-described hardware structure of the mobile node 100 is just an example. That is to say, the present invention is not limited to this.

Here it should be noted that regarding the wireless network establishment unit U2, its wireless network signal for establishing the wireless network and its radio signal for the TDOA based distance measurement may be the same or different. Actually it is possible to use an electromagnetic signal such as a Wi-Fi signal, a Bluetooth signal, or a Bluetooth low energy (BLE) signal. In addition, the audio signal, which is sent or received by the audio signal processing unit U3, may be in a range of human hearing. Of course, the present invention is not limited to this. That is to say, this kind of audio signal may be an ultrasonic signal or any other signal whose frequency is outside the range of human hearing.

FIG. 5 is a flowchart of a process of locating a mobile node.

As shown in FIG. 5, the process may include at least (1) establishing a local wireless network (S1); achieving the TDOA based distance measurement (S2); locating the mobile node (S3); tracking the position of the mobile node (S4); and (5) correcting the position of the mobile node (S5).

Regarding STEP S1, the local wireless network may have a star-connected topology structure composed of master and slave nodes, and the number of the master and slave nodes may be changeable. On the basis of this kind of network topology, a mater node may locate its corresponding slave nodes at the same time. In addition, the localization may also not be limited to a certain time sequence. As a result, it is possible to increase the localization efficiency. In general, the local wireless network may adopt a Bluetooth or BLE network.

Regarding STEP S2, it is possible to achieve the TDOA based distance measurement by utilizing two signals having different propagation velocities. In general, an electromagnetic signal (a radio frequency signal) and an audio signal may be adopted. As for a mobile node such as a smart phone, one of the two signals may be a radio signal such as a Wi-Fi signal or a Bluetooth or BLE signal, and another one may be an audio signal on the basis of a microphone or a speaker.

Regarding STEPS S3 to S5, they are a localization step, a tracking step, and a correction step on the basis of inertial sensor data, respectively. As for a mobile node such as a smart phone, since the accuracies of different inertial sensor data are different, the localization accuracy may rely on the inertial sensor of the mobile node. Here it should be noted that the details of the localization step, the tracking step, and the correction step on the basis of the inertial sensor data will be described below.

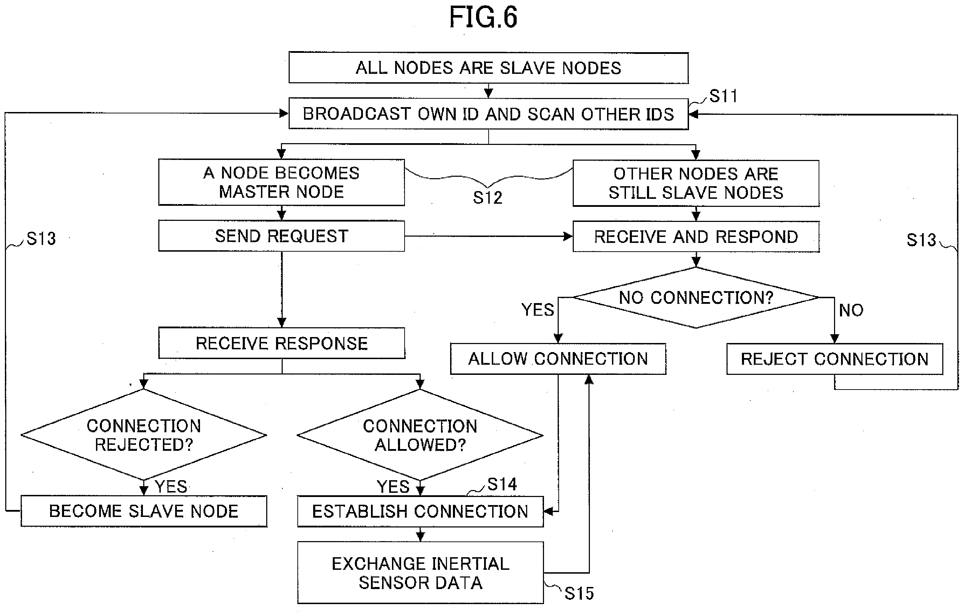

FIG. 6 is a flowchart of a process of establishing a wireless network.

As shown in FIG. 6, the process may include at least the following steps. (1) Since all nodes are slave nodes before the wireless network is established, each node broadcasts its own node ID, and scans the node IDs of the other nodes (S11). Here the node ID of each node may include information related to the feature and interest of the corresponding node. (2) if a first node generates a desire for conducting localization on the basis of a node ID scanned by itself (e.g., if the first node found that the interest included in this node ID conforms with its own interest, then it may want to find the position of the node (also called a "second node") corresponding to this node ID), then its role may become a master node, and the other nodes may still be slave nodes (S12). (3) The first node (i.e., the master node) sends a request for connection to the second node; if the connection fails (e.g., the second node rejects the request for connection), then the first node may become a slave node again (S13). After that, STEPS S11 and S12 are conducted. (4) If the second node accepts the request for connection, then the first node may establish the connection (S14). (5) After establishing the connection, the first node may activate a mechanism of exchanging inertial sensor data with the second node (S15). The mechanism may be adopted in STEPS S2 to S5 shown in FIG. 5.

Here it should be noted that the interest of a node may be used to find a person of interest on line. Actually, the information related to the interest of a node may be represented by the node ID of the node, or may be represented by another feature value related to the node ID of the node. In the former case, for example, different node IDs may be used to represent different interests. And in the latter case, for example, different feature values may be used to represent different interests, and are related to the corresponding node ID. Here the purpose of setting the interest of a node is just for being able to be applied to a scenario in which it is necessary to find a user whose interest is the same as or similar to the interest of the node. However, the present invention may also be applied to another scenario in which it is not necessary to consider the interest of a node.

Of course, the above-described wireless network establishment step is just an example. The present invention is not limited to this. That is to say, any other proper wireless network establishment step may also be applied to the present invention.

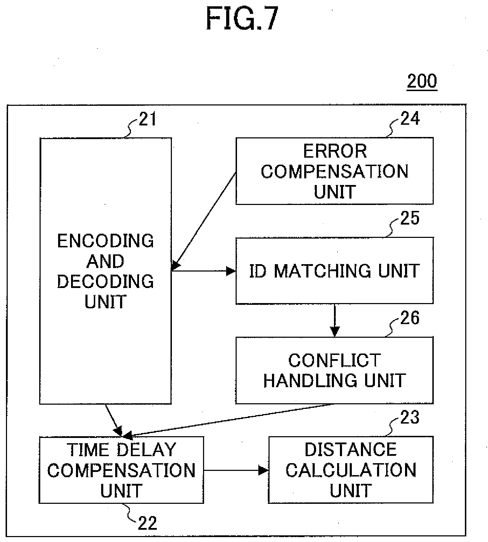

FIG. 7 is a block diagram of an assembly for encoding and decoding a node ID as well as calculating the distance between two mobile nodes by utilizing the TDOA algorithm.

As shown in FIG. 7, an assembly 200 includes at least (1) an encoding and decoding unit 21 configured to encode and decode the frequency of an audio signal whose content is related to a node ID; (2) a time delay compensation unit 22 configured to compensate (correct) a time delay so as to improve the result accuracy; (3) a distance calculation unit 23 configured to, on the basis of the result of the time delay compensation unit 22, calculate the distance between two mobile nodes by using the arrival (receipt) time of the audio signal; (4) an error compensation unit 24 configured to compensate for the error occurring in the encoding and decoding unit 21 and/or the error occurring in the time delay compensation unit 22 due to the Doppler effect; (5) an ID matching unit 25 configured to, on the basis of the result of the encoding and decoding unit 21, determine whether a receipt signal is one proper for conducting the TDOA based distance calculation (e.g., whether the receipt signal is sent from the sending node to which the distance needs to be measured); and (6) a conflict handling unit 26 configured to, on the basis of the result of the ID matching unit 25, handle a case in which the decoded node IDs do not match each other (here it should be noted that this kind of case is called "conflict"), so as to further improve the accuracy of the TDOA based distance calculation.

Of course, what the assembly 200 shown in FIG. 7 includes is just an example. That is to say, the present invention is not limited to the units 21 to 26 shown in FIG. 7.

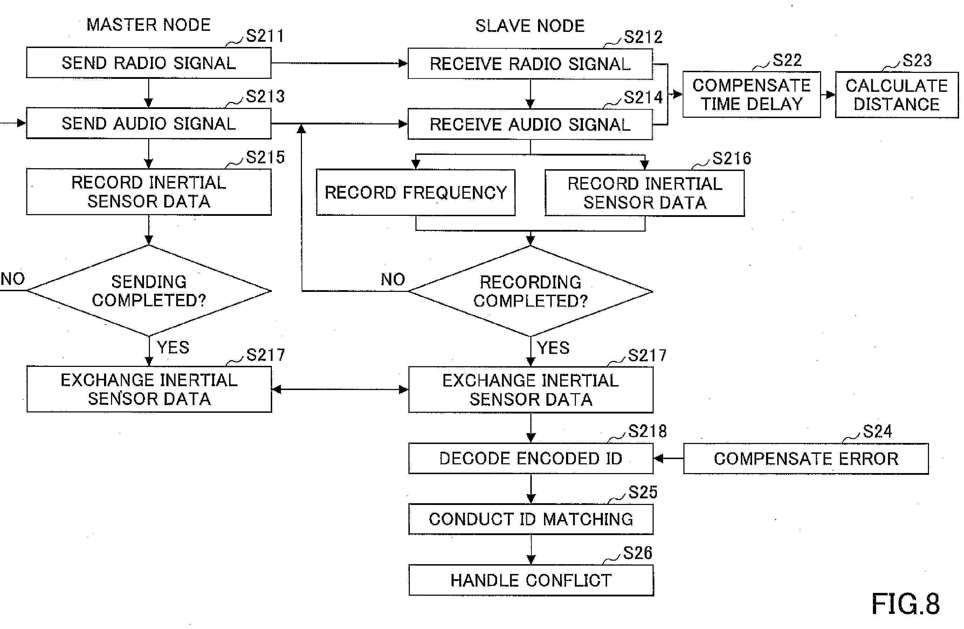

FIG. 8 is a flowchart of a process of encoding and decoding a node ID by utilizing the frequency of an audio signal.

As shown in FIG. 8, the process may include at least (1) sending, by a master node, radio signals carrying its node ID (S211), and receiving, by a slave node, the radio signals carrying the node ID from the master node (S212); (2) sending, by the master node, audio signals carrying its node IDs respectively encoded by utilizing frequencies (also called "sending frequencies") (S213), and receiving, by the slave node, the audio signals carrying the encoded node IDs from the master node (S214); (3) recording, by the master node, inertial sensor data preferably according to a sending order (S215), and recording, by the slave node, the receipt frequencies of the audio signals and inertial sensor data preferably according to a receipt order (S216); (4) exchanging, between the master and slave nodes, their inertial sensor data (S217); (5) utilizing, by the slave node, the receipt frequencies of the audio signals and the inertial sensor data (of the master and slave nodes) to conduct the Doppler effect based correction and node ID decoding (S24); (6) after conducting the node ID decoding by utilizing the corrected receipt frequencies of the audio signals, conducting node ID matching with respect to the decoded node IDs from the radio signals and the decoded IDs from the audio signals, respectively (S25); and (7) if there is not one of the decoded node IDs from the audio signals which matches the decoded ID from the corresponding radio signal, then conducting the conflict handling as described above (S26). Here it should be noted that these steps will be concretely described below.

In STEPS S25 and S26, the master and slave nodes may record their own inertial sensor data at the sending and receipt times of the audio signals, respectively. Of course, it is also possible to record their inertial sensor data at other times, respectively. After all the audio signals are sent, the master and slave nodes may exchange their inertial sensor data, i.e., $i_n$ (n=1,2,...,n) and $i_n'$ (n=1,2,...,n); here, n refers to the number of the audio signals. That is to say, one audio signal corresponds to one piece of inertial sensor data of the master node and one piece of inertial sensor data of the slave node.

Here it should be noted that a node ID may have only one bit or plural bits. In the latter case, it is possible to use different audio signal frequencies to encode the different bits of the ID, so that at the receipt node, it is possible to decode each bit by determining the different audio signal frequencies so as to obtain the whole ID. Of course, it is also possible to adopt any other proper form of encoding and decoding the node ID. For example, one audio signal frequency may correspond to a node ID having plural bits. In particular, 1 Hz may correspond to a node ID 11; 2 Hz may correspond to a node ID 12; 3 Hz may correspond to a node ID 13; and so on.

In addition, the sending frequencies of the audio signals are used to encode the node ID; however, the present invention is not limited to this. Actually, it is also possible to use the sending frequencies of the audio signals to encode other information.

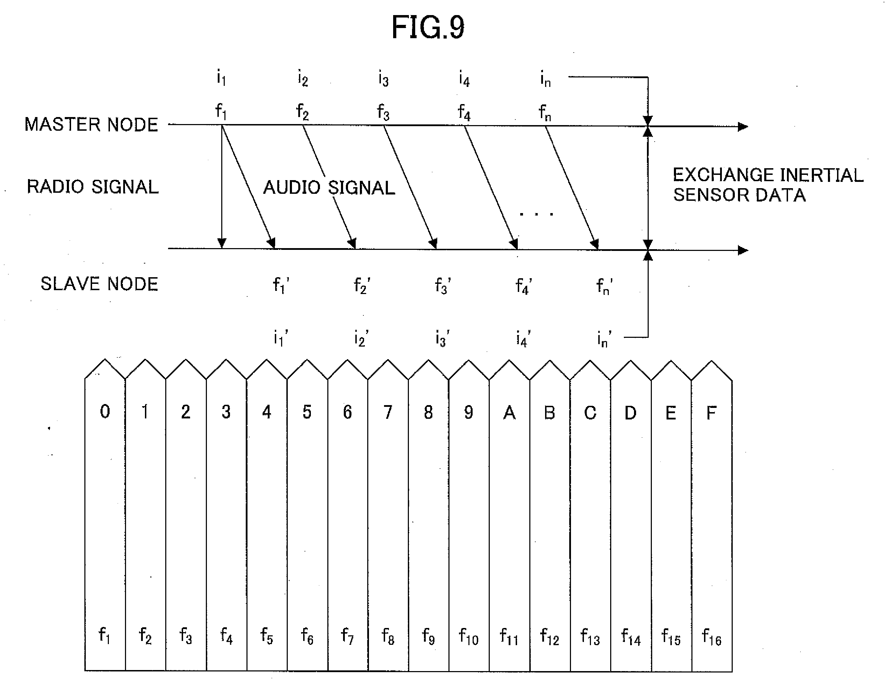

FIG. 9 illustrates a code book for encoding and decoding each bit of a node ID by utilizing different audio signal frequencies.

As shown in FIG. 9, in the code book, each audio signal frequency (i.e., each sending frequency) represents a specific piece of data (or a specific bit). Regarding the master node, first it sends a first audio signal, whose frequency is $f_1$, according to a predetermined number of pulses, for example, 8 pulses; second it sends a second audio signal, whose frequency is $f_2$, according to a predetermined number of pulses, for example, 8 pulses; ...; and, finally it sends an n-th audio signal, whose frequency is $f_n$, according to a predetermined number of pulses, for example, 8 pulses. Here n=16. On the other hand, regarding the slave node, it receives the first audio signal to the n-th audio signal, respectively.

Here it should be noted that the encoding frequency bandwidth of each audio signal is decided on the basis of the frequency bandwidth of a microphone. As for most of smart phones, the frequency bandwidth is from 20 Hz to 20 KHz. Furthermore, the data in the code book may be any form, for example, a binary form, a decimal form, or a hexadecimal form. Here, in the code book shown in FIG. 9, the hexadecimal form is adopted. In particular, the sending frequency $f_1$ corresponds to hexadecimal value 0; the sending frequency $f_2$ corresponds to hexadecimal value 1; ...; and the sending frequency $f_{16}$ corresponds to hexadecimal value F.

In addition, as shown in FIG. 9, the sending frequencies $f_1$ to $f_n$ of the audio signals at the master node are different from the receipt frequencies $f_1'$ to $f_n'$ of the audio signals at the slave node. The reason is that the Doppler effect or other interference exists between the master and slave nodes.

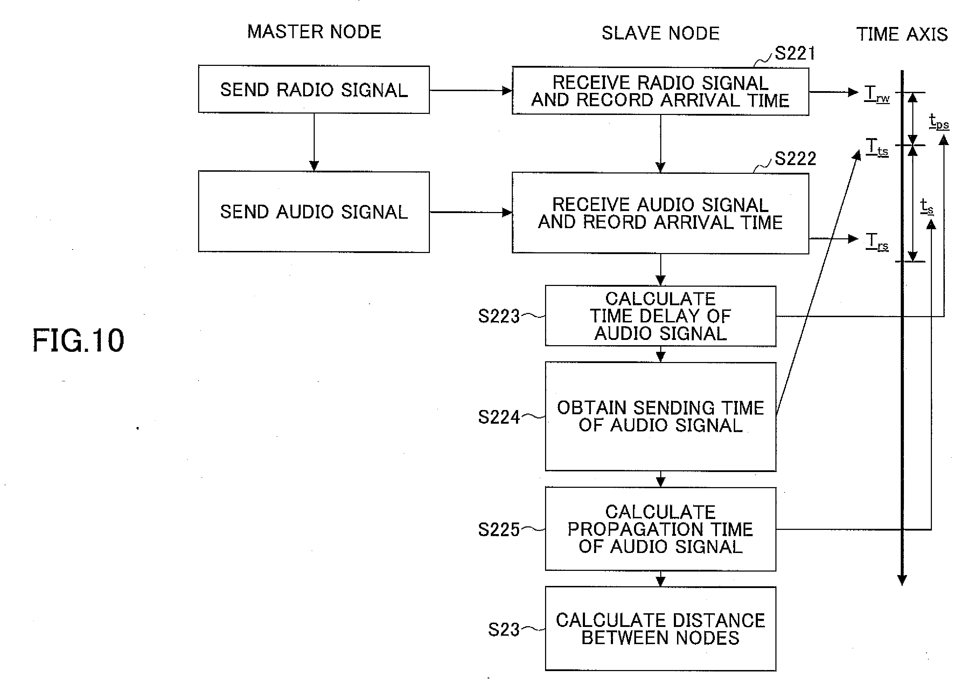

FIG. 10 is a flowchart of a process of measuring the distance between two mobile nodes by utilizing the TDOA algorithm.

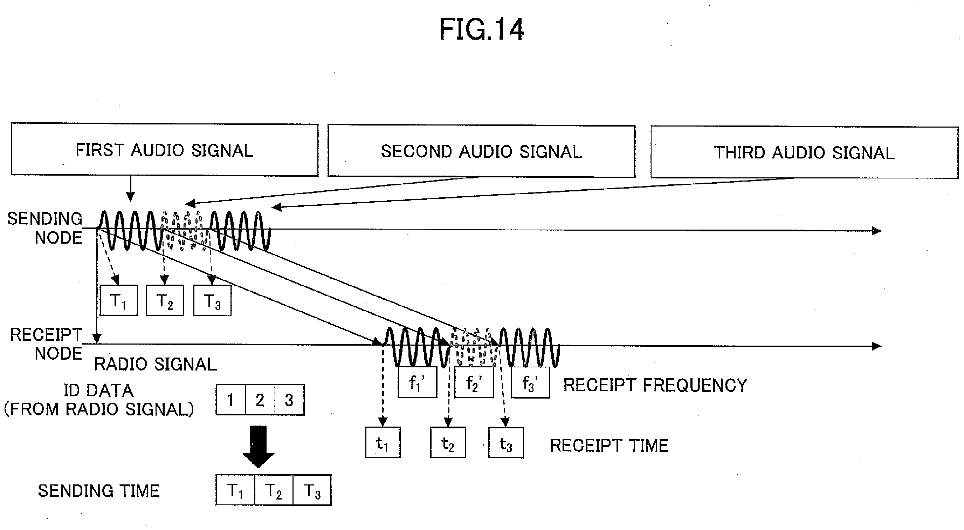

As shown in FIG. 10, the process may include at least (1) receiving a radio signal and recording the receipt time $T_{rw}$ of the radio signal by a slave node (S221); (2) receiving an audio signal and recording the receipt time $T_{rs}$ of the audio signal by the slave node (S222); (3) calculating, by the slave node, a processing time delay $t_{ps}$ of the audio signal on the basis of, for example, $\Delta T = (1/f_1) \times N_{pulses}$ (S223) (here $f_1$ refers to the encoding frequency of a first audio signal, and $N_{pulses}$ refers to the number of pulses of each encoding frequency based audio signal; for example, $N_{pulses}=8$); (4) obtaining, by the slave node, the sending time $T_{ts}$ of the audio signal by conducting sending time delay compensation (S224); (5) calculating, by the slave node, the propagation time $t_s$ of the audio signal (S225) (here, by determining the Doppler effect so as to correct the receipt time of the audio signal, it is also possible to calculate a more accurate propagation time $t_s$ of the audio signal; the details will be given below by referring to FIG. 14); and (6) calculating, by the slave node, the distance between the slave node and a corresponding master node by utilizing $d = t_s \times v = [T_{rs} - (T_{rw} + t_{ps})] \times v$ (here d refers to the distance; v refers to the propagation velocity of the audio signal; $t_s$ refers to the propagation time of the audio signal; $T_{rs}$ refers to the receipt (arrival) time of the audio signal; $T_{rw}$ refers to the receipt (arrival) time of the corresponding radio signal; and $t_{ps}$ refers to the processing time delay of the audio signal).

Regarding STEP S221, since the propagation velocity of the corresponding radio signal is very fast, in order to simplify the calculation, it is assumed that $T_{rw} = T_{tw}$ (here $T_{tw}$ refers to the sending time of the corresponding radio signal), i.e., the propagation time of the corresponding radio signal is 0.

Regarding STEP S222, in general, the slave node records the arrival time of the audio signal. On the basis of this, the calculated distance is one between the master and slave nodes at the time when the master node sends the audio signal. However, in an actual scenario, since the master and slave nodes move continuously, the distance between the two nodes may also change continuously. As a result, a localization error may rely on the error of the time delay (e.g., $t_{ps} = (1/f_1) \times N_{pulses}$) of sending the audio signal and the error of the receipt time of the audio signal. Here it should be noted that by determining the Doppler effect so as to correct the receipt time of the audio signal, it is possible to correct this kind of localization error; the details will be given below by referring to FIG 14.

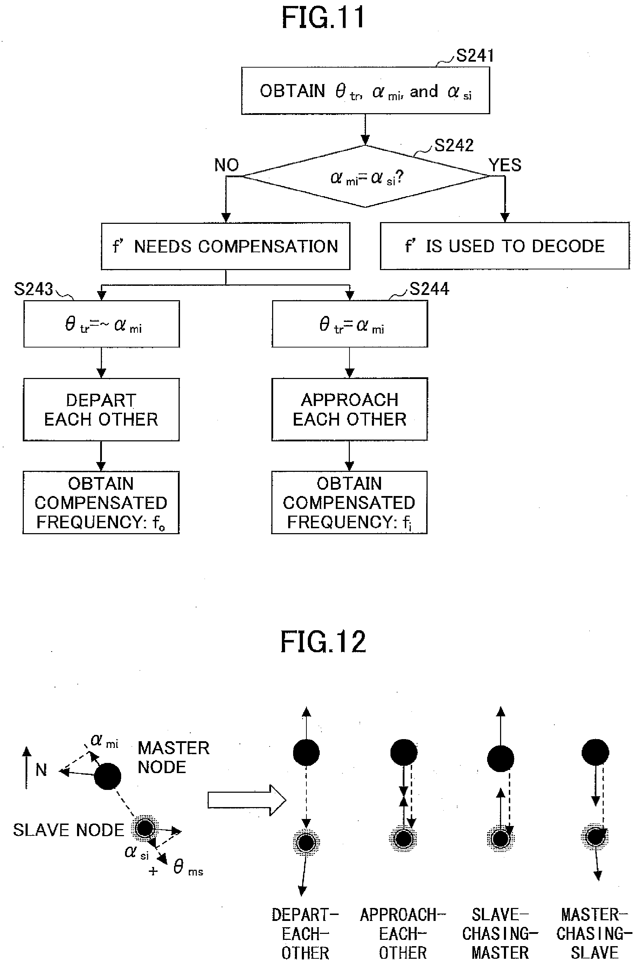

FIG. 11 is a flowchart of a process of correcting the receipt frequency of an audio signal on the basis of the principle of the Doppler effect.

As shown in FIG. 11, the process may include at least (1) obtaining the direction $\theta_{tr}$ from a master node to a slave node from inertial sensor data, and projecting the angular acceleration of the master node onto the direction so as to obtain the projected angular acceleration $\alpha_{mi}$ of the master node; in the same way, obtaining the projected angular acceleration $\alpha_{si}$ of the slave node (S241); (2) on the basis of the relationship of $\alpha_{mi}$ and $\alpha_{si}$, dividing the movements of the master and slave nodes into two types, i.e., same-direction movement and opposite-direction movement (S242); (3) if the directions of $\alpha_{mi}$ and $\alpha_{si}$ are the same (that means the movements of the master and slave nodes are the same-direction movement), then, on the basis of $f = f' \times ((v \pm v_m)/(v \pm v_s)) \doteq f'$, letting the receipt frequency of the audio signal represent the sending frequency of the audio signal (here f refers to the sending frequency of the audio signal; f refers to the receipt frequency of the audio signal; v refers to the propagation velocity of the audio signal; $v_m$ refers to the velocity of the master node (i.e., a sound source velocity); and $v_s$ refers to the velocity of the slave node (i.e., a receipt node velocity)), thereby not needing to conduct the Doppler effect based compensation; (4) if the directions of $\alpha_{mi}$ and $\alpha_{si}$ are opposite (that means the movements of the master and slave nodes are the opposite-direction movement), then, further dividing the movement of the master and slave nodes into two types, i.e., depart-each-other movement and approach-each-other movement; and (5) in the depart-each-other movement case, compensating the receipt frequency f' to $f_0$ on the basis of $f_0 = f' \times ((v + v_m)/(v - v_s))$ (S243) (here $f_0$ refers to the sending frequency of the audio signal; f refers to the receipt frequency of the audio signal; v refers to the propagation velocity of the audio signal; $v_m$ refers to the velocity of the master node (i.e., the sound source velocity); and $v_s$ refers to the velocity of the slave node (i.e., the receipt node velocity)), and in the approach-each-other movement case, compensating the receipt frequency f' to $f_i$ on the basis of $f_i=f' \times ((v-v_m)/(v+v_s))$ (S244) (here $f_i$ refers to the sending frequency of the audio signal; f' refers to the receipt frequency of the audio signal; v refers to the propagation velocity of the audio signal; $v_m$ refers to the velocity of the master node (i.e., the sound source velocity); and $v_s$ refers to the velocity of the slave node (i.e., the receipt node velocity)).

FIG. 12 illustrates a few types of the Doppler effect.

As shown in FIG. 12, by projecting the velocities of master and slave nodes onto the direction along the straight line generated from the master node to the slave node (i.e., the angle is $\theta_{ms}$), it is possible to obtain the projected velocity $\alpha_{mi}$ of the master node and the projected velocity $\alpha_{si}$ of the slave node. After that, on the basis of the two projected velocities, it is possible to determine four types of the movements of the master and slave nodes, i.e., depart-each-other movement (the moving directions of the two nodes are opposite), approach-each-other movement (the moving directions of the two node are opposite), slave-chasing-master movement (the moving directions of the two nodes are the same), and master-chasing-slave movement (the moving directions of the two nodes are the same). In particular, the depart-each-other movement indicates that the angular velocity of the projection angle of the master node is opposite to the direction between the master and slave nodes, and the angular velocity of the projection angle of the master node is opposite to the angular velocity of the projection angle of the slave node. The approach-each-other movement indicates that the angular velocity of the projection angle of the master node is the same as the direction between the master and slave nodes, and the angular velocity of the projection angle of the master node is opposite to the angular velocity of the projection angle of the slave node. The slave-chasing-master movement indicates that the angular velocity of the projection angle of the master node is opposite to the direction between the master and slave nodes, and the angular velocity of the projection angle of the master node is the same as the angular velocity of the projection angle of the slave node. And the master-chasing-slave movement indicates that the angular velocity of the projection angle of the master node is the same as the direction between the master and slave nodes, and the angular velocity of the projection angle of the master node is the same as the angular velocity of the projection angle of the slave node.

Of course, what FIG. 12 shows is just an example; the present invention is not limited to this. In other words, it is also possible to adopt any other proper way to determine whether the Doppler effect exists and to determine the type of the Doppler effect if it exists.

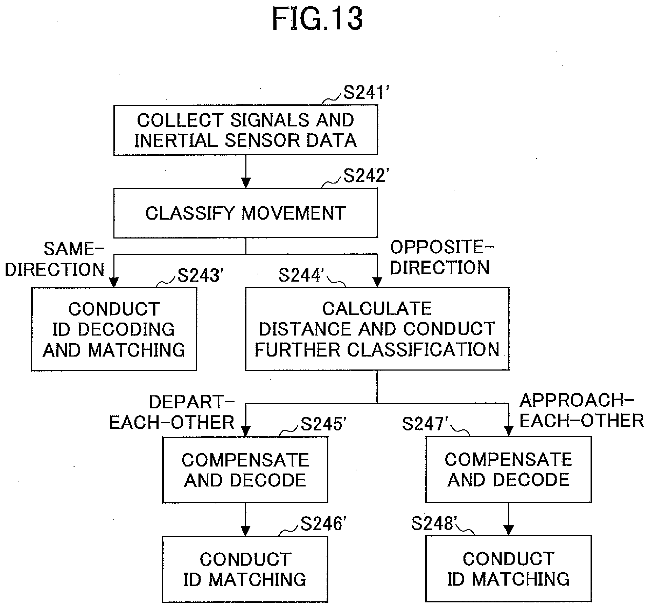

FIG. 13 is a flowchart of a process of determining the type of the Doppler effect.

As shown in FIG. 13, the process may include at least (1) collecting an audio signal, a radio signal, and inertial sensor data (S241'); and (2) by utilizing the inertial sensor data, dividing the movement of two nodes into two types, i.e., same-direction movement and opposite-direction movement (S242') (here, since the inertial sensor data includes information such as accelerations, angular accelerations, and velocity directions, it is possible to, by projecting the moving direction of a slave node onto the moving direction of a master node, easily determine that the movement of the two nodes is the same-direction movement or the opposite-direction movement). If the movement of the two nodes is the same-direction movement, then it is not necessary to conduct any compensation, i.e., it is possible to directly conduct node ID decoding with respect to the audio signal so as to obtain a decoded node ID; after that, the decoded node ID is matched (compared) with a node ID carried in the radio signal (S243'). On the other hand, if the movement of the two nodes is the opposite-direction movement, then it is possible to further determine that the movement of the two nodes is depart-each-other movement or approach-each-other movement as follows. First a sequence of audio and radio signals are sent in a predetermined time period. Next, on the basis of each pair of an audio signal and a radio signal, plural distances are calculated by utilizing the TDOA algorithm. After that, according to the change of the plural distances in the predetermined time period, it is possible to determine the type of the movement of the two nodes. For example, if the change of the plural distances in the predetermined time period is gradually increased, then it may be determined that the movement of the two nodes is the depart-each-other movement, and if the change of the plural distances in the predetermined time period is gradually decreased, then it may be determined that the movement of the two nodes is the approach-each-other movement (S244'). If the movement of the two nodes is the depart-each-other movement, i.e., if the type of the Doppler effect is a depart-each-other type, then it is possible to conduct compensation with respect to the receipt frequency of the audio signal as done in STEP S243 of FIG. 11 so as to obtain a decoded node ID on the basis of compensated receipt frequency of the audio signal (S245'). After that, the decoded node ID is matched (compared) with the node ID carried in the radio signal (S246'). On the other hand, if the movement of the two nodes is the approach-each-other movement, i.e., if the type of the Doppler effect is an approach-each-other type, then it is possible to conduct compensation with respect to the receipt frequency of the audio signal as done in STEP S244 of FIG. 11 so as to obtain a decoded node ID on the basis of the compensated receipt frequency of the audio signal (S247'). After that, the decoded node ID is matched (compared) with the node ID carried in the radio signal (S248').

The principle of the process shown in FIG. 13 will be described below by referring to FIG. 14.

FIG. 14 illustrates the principle of determining the type of the Doppler effect.

As shown in FIG. 14, a sending node sends three audio signals (i.e., first, second, and third signal), whose

frequencies are $f_1$, $f_2$, and $f_3$, at three sending times $T_1$, $T_2$, and $T_3$, respectively, and the frequencies represent ID values 1, 2, and 3, respectively. On the other hand, at a receipt node, according to the ID values respectively carried by the three radio signals, it is possible to record the receipt time $t_1$, $t_2$, and $t_3$ of the three audio signals. And, according to the ID values carried by the three radio signals, it is also possible to estimate the sending times $T_1$, $T_2$, and $T_3$ of the three audio signals. After that, on the basis of the differences between $T_1$ and $t_1$, $T_2$ and $t_2$, and $T_3$ and $t_3$, it is possible to calculate three propagation times of the three audio signals, so that it is possible to calculate three distances between the two nodes, for example, at the three sending times. And then, it is possible to determine the type of the movement of the two nodes as well as the type of the Doppler effect (if it exists between the two nodes) on the basis of the change of the three distances as described above.

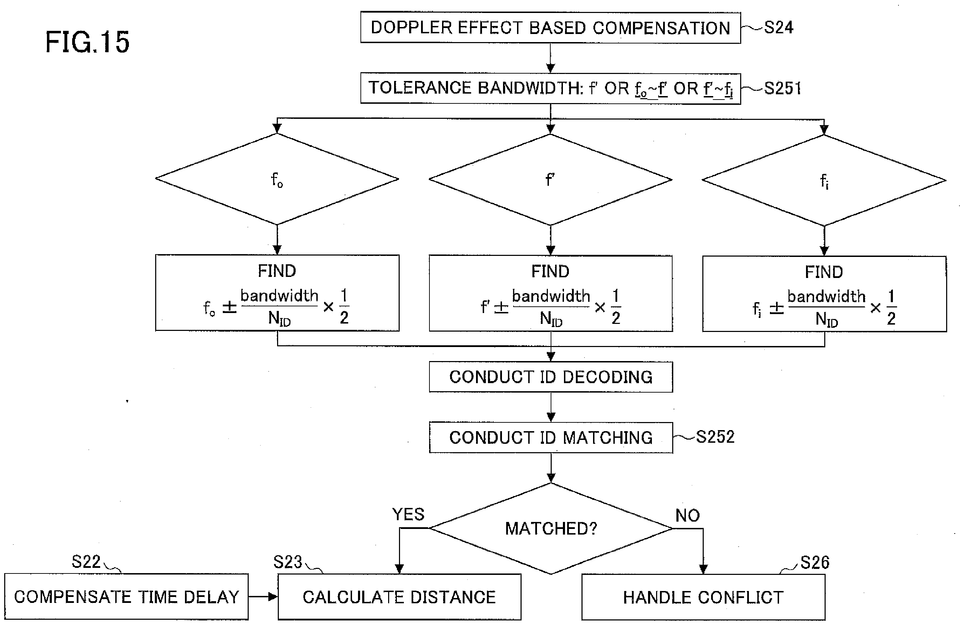

FIG. 15 is a flowchart of a process of conducting node ID decoding by expanding a frequency decoding tolerance.

After decoding the node ID carried by a first signal (e.g., an audio signal) by utilizing a compensated receipt frequency of the first signal, if it is still determined that the decoded node ID from the first signal does not match the decoded ID from a second signal (e.g., a radio signal), then it is possible to adopt the process shown in FIG. 15 to expand the frequency decoding tolerance of the first signal so as to further decode the node ID carried by the first signal.

As shown in FIG. 15, the process may include at least (1) compensating the receipt frequency of the first signal on the basis of STEP S24 shown in FIG. 15, and after that, dividing the minimum tolerant bandwidth into three types, i.e., f, $f_0 \sim f'$, and $f' \sim f_i$; (2) on the basis of the three types, if the receipt frequency f represents the sending frequency, then expanding the bandwidth tolerance to $f' \pm (\text{bandwidth}/N_{ID}) \times (1/2)$; if the receipt frequency is compensated to $f_i$, then expanding the bandwidth tolerance to $f_i \pm ((f'-f_i)/2) \pm (\text{bandwidth}/N_{ID}) \times (1/2)$; and if the receipt frequency is compensated to $f_0$, then expanding the bandwidth tolerance to $f_i \pm ((f'-f_i)/2) \pm (\text{bandwidth}/N_{ID}) \times (1/2)$, thereby being able to increase the frequency decoding bandwidth (here f refers to the receipt frequency; bandwidth refers to a sound encoding frequency bandwidth; and $N_{ID}$ refers to the number of bits of the node ID (S251)); (3) decoding the node ID carried by the first signal on the basis of the expanded bandwidth tolerance so as to compare the decoded node ID from the first signal with the decoded node ID from the second signal, so that it is possible to determine whether the two decoded node IDs match each other (S252); (4) if the two decoded node IDs match each other, then conducting STEPS S22 and S23 shown in FIG. 15; and if the two decoded node IDs do not match each other, then carrying out STEP S26 shown in FIG. 15.

Regarding STEP S252, if the compensated receipt frequency of the first signal is expressed as di, then a frequency range of $d_{i-1}$ to $d_i$ to $d_{i+1}$ represents the compensated frequency of the first signal after expanding the bandwidth tolerance. If the frequency corresponding to the node ID carried by the second signal is within the frequency range of $d_{i-1}$ to $d_i$ to $d_{i+1}$, then it is possible to consider that the two decoded node IDs match each other.

Since the Doppler effect exists, it is impossible to determine that the receipt frequency of the first signal compensated on the basis of the principle of the Doppler effect is most accurate. As a result, by properly expanding the frequency decoding tolerant bandwidth of the first signal, it is possible to obtain a decoded node ID as correct as possible. In this way, it is possible to get a decoded node ID as matched as possible so as to be able to determine that the received first and second signals are sent from the same sending node, so that it is possible carry out the follow-on TDOA based distance measurement.

FIG. 16 is a flowchart of a process of handling conflict shown in FIG. 15.

As shown in FIG. 16, the process may include at least (1) after the conflict occurs, calculating the sum $D_s$ of the differences of the node IDs sent by the radio signals and the node IDs sent by the audio signals on the basis of $D_s = \sum_i D_i$, and calculating the deviation $D_{\sigma i}$ of the differences of the node IDs send by the radio signals and the node IDs sent by the audio signals on the basis of $D_{\sigma i} = |D_i - D_{i-1}|$ (S261); (2) dividing the conflict into four cases on the basis of $D_s$ and $D_{\sigma i}$ (S262); and (3) according to the four conflict cases, setting a waiting time $t_w$ on the basis of $t_w = 0$, $t_w = (1/f_j) \times N_{\text{pulses}}$, $t_w = (1/(\sum_i f_i/N_{ID})) \times N_{\text{pulses}} \times N_{ID}$, and $t_w = (1/(\sum_i f_i/N_{ID})) \times N_{\text{pulses}} \times N_{ID} + (1/f_j) \times N_{\text{pulses}}$, respectively (S263), and after a slave node waits the waiting time $t_w$, sending, by the slave node, a request for resending an audio signal to a corresponding master node (S264).

In particular, the conflict handling may include the following steps as shown in FIG. 16.

(a) After the conflict occurs, the sum $D_s$ of the differences of real node IDs (the node IDs carried by the radio signals) and the decoded IDs from the audio signals as well as the deviation $D_{\sigma i}$ of the differences of the real node IDs and the decoded node IDs from the audio signals are calculated on the basis of $D_s = \sum_i D_i$ and $D_{\sigma i} = |D_i - D_{i-1}|$, respectively. Here $D_i$ refers to the difference of a real node ID and a decoded node ID, and $D_i = |ID_{wi} - ID_{si}|$; $ID_{wi}$ refers to the real node ID, and $ID_{si}$ refers to the decoded node ID; $D_s$ refers to the sum of all $D_i$; and $D_{\sigma i}$ refers to the absolute difference of $D_i$ and $D_{i-1}$. In other words, $D_s$ represents the signal trend (state), and $D_{\sigma i}$ represents the signal change.

(b) On the basis of $D_s$ and $D_{\sigma i}$, the conflict is divided into the following four types:

(b-1) approaching a real signal, and including a small amount of noise: $D_s \leqq N_{ID}$ and $D_{\sigma i} \leqq 1$;
(b-2) approaching a real signal, and including a large amount of noise: $D_s \leqq N_{ID}$ and $D_{\sigma i} > 1$;
(b-3) not approaching a real signal, and including a small amount of noise: $D_s > N_{ID}$ and $D_{\sigma i} \leqq 1$; and

(b-4) not approaching a real signal, and including a large amount of noise: $D_s > N_{ID}$ and $D_{\sigma i} > 1$.

(c) On the basis of the four conflict types, the waiting time $t_w$ is calculated as follows:

(c-1) approaching a real signal, and including a small amount of noise: $t_w = 0$;
(c-2) approaching a real signal, and including a large amount of noise: $t_w = (1/f_j) \times N_{pulses}$;
(c-3) not approaching a real signal, and including a small amount of noise: $t_w = (1/(\sum_i f_i / N_{ID})) \times N_{pulses} \times N_{ID}$; and
(c-4) not approach a real signal, and including a large amount of noise: $t_w = (1/(\sum_i f_i / N_{ID})) \times N_{pulses} \times N_{ID} + (1/f_j) \times N_{pulses}$.

Here $t_w$ refers to the waiting time; $f_i$ refers to the receipt frequency of an audio signal; $f_j$ refers to the receipt frequency of an audio signal whose relevant $D_{\sigma i}$ is maximum; $N_{pulses}$ refers to the number of pulses of each encoding frequency based audio signal; $N_{ID}$ refers to the number of bits of the node ID; and $f_{average}$ in FIG. 16 equals to $\sum_i f_i / N_{ID}$.

(d) After the slave node waits the waiting time $t_w$, it sends a request for resending signals.
(e) After the master node receives the request for resending signals, it resends a radio signal and an audio signal with an encoding frequency.
(f) After the master node sends, three times, the audio signals with the encoding frequencies, if it is still impossible to correctly decode the node ID from the audio signals, the master node may change its role to a slave node.

Of course, the above-described determination conditions and waiting times are just examples. Actually the principle of setting the above-described determination conditions and waiting times is on the basis of the distribution and trends of the mismatching bits of the decoded IDs from the first and second signals. However, it should be noted that the present invention is not limited to this. In other words, it is also possible to adopt any other proper approach to set the above-described determinations conditions and waiting times.

FIG. 17 illustrates the principle of correcting the receipt time of a first signal so as to correct the propagation time of the first signal.

As shown in FIG. 17, after a sending node sends an audio signal to a receipt node, since the Doppler effect exists between the two nodes, the received audio signal at the receipt node may have not only an incorrect frequency but also an incorrect receipt time, so that the calculated propagation time of the audio signal may be incorrect. That is to say, for example, in a case where the sending node sends a first audio signal with a frequency $f_1$, a second audio signal with a frequency $f_2$, and a third audio signal with a frequency $f_3$ at sending times $T_1$, $T_2$, and $T_3$, respectively, and at the receipt node, the receipt times of receiving the three audio signals with frequencies $f_1'$, $f_2'$, and $f_3'$ are recorded as $t_1$, $t_2$, and $t_3$, since the Doppler effect exists, the propagation distances of the three audio signals may become longer or shorter, and at the same time, their propagation times may change correspondingly. As a result, how to record the timing points of sending and receiving the audio signals may influence their propagation times in a case where the Doppler effect exists. For example, if the sending start time of the first audio signal with the frequency $f_1$ serves as the sending timing point, and the receipt start time of the first audio signal with the frequency $f_1'$ serves as the receipt timing point, then the propagation time of the first audio signal may be calculated as $\Delta T = t_1 - T_1 = t_1 - T_0 = t_1 - 0 = t_1$ without an error; here it is assumed that $T_1 = T_0 = 0$. If an intermediate time of sending the first audio signal with the frequency $f_1$ serves as the sending timing point, and an intermediate time of receiving the first audio signal with the frequency $f_1'$ serves as the receipt timing point, then it is necessary to conduct the Doppler effect based compensation, i.e., the propagation time of the first audio signal is compensated to $\Delta T = t_1 - T_1 = t_1 - [((1/f_1) + (1/f_1')) \times n_{pulses}]$. If the sending end time of the first audio signal with the frequency $f_1$ (i.e., the time point when $N_{pulses}$ (e.g., eight) pulses are sent) serves as the sending timing point, and the receipt end time of the first audio signal with the frequency f1' serves as the receipt timing point, then it is necessary to conduct the Doppler effect based compensation, i.e., the propagation time of the first audio signal is compensated to $\Delta T = t_1 - T_1 = t_1 - [((1/f_1) + (1/f_1')) \times N_{pulses}]$. If the sending start time of the second audio signal with the frequency $f_2$ serves as the sending timing point, and the receipt start time of the second audio signal with the frequency $f_2'$ serves as the receipt timing point, then it is necessary to conduct the Doppler effect based compensation, i.e., the propagation time of the second audio signal is compensated to $\Delta T = t_2 - T_2 = t_2 - (T_1 + (1/f_1) \times N_{pulses}) = t_2 - (1/f_1) \times N_{pulses}$. Here, $f_1$ refers to the sending frequency of the first audio signal; $f_1'$ refers to the receipt frequency of the first audio signal; and so on. In the same way, if an intermediate time $T_2$ of sending the second audio signal with the frequency $f_2$ serves as the sending timing point, and an intermediate time $t_2$ of receiving the second audio signal with the frequency $f_2'$ serves as the receipt timing point, then the propagation time of the second audio signal is compensated to $\Delta T = t_2 - T_2 = (t_2 - (1/f_2') \times n_{pulses}) - (T_1 + (1/f_1) \times N_{pulses} + (1/f_2) \times n_{pulses}) = t_2 - [(1/f_1) \times N_{pulses} + ((1/f_2) + (1/f_2')) \times n_{pulses}]$. If an intermediate time T2 of sending the second audio signal serves as the sending time, and the receipt end time of the second audio signal serves as the receipt timing point, then the propagation time of the second audio signal is compensated to $\Delta T = t_2 - T_2 = (t_2 - (1/f_2') \times N_{pulses}) - (T_1 + (1/f_1) \times N_{pulses} + (1/f_2) \times N_{pulses}) = t_2 - [(1/f_1) \times N_{pulses} + ((1/f_2) + (1/f_2')) \times N_{pulses}]$. Here $f_2$ re-

fers to the sending frequency of the second audio signal; $f_2'$ refers to the receipt frequency of the second audio signal; and so on.

To sum up, this kind of propagation time correction may be summarized as follows.

If a sending time $T_K$ of a K-th audio signal serves as the sending timing point, and an intermediate time $t_K$ of receiving the K-th audio signal serves as the receipt timing point, then the propagation time of the K-th audio signal is corrected to $\Delta_t=t_K-T_K=(t_K-(1/f_K')\times n_{pulses})-(T_1+\sum_1^{(K-1)}(1/f_i)\times N_{pulses})+(1/f_K)\times n_{pulses})=t_K-[\sum_1^{(K-1)}((1/f_i)\times N_{pulses})+((1/f_K)+(1/f_K'))\times n_{pulses}]$. Here $f_i$ refers to the sending frequency of an i-th audio signal, and i refers to a positive integer less than K; $f_K$ refers to the sending frequency of the K-th audio signal, $f_K'$ refers to the receipt frequency of the K-th audio signal, and K refers to a positive integer; and $n_{pulses}$ refers to the number of pluses of each encoding frequency based audio signal, which have been sent from the sending time, $N_{pulses}$ refers to the number (i.e., the total number) of pulses of each encoding frequency based audio signal, for example, 8, and $0 \leq n_{pulses} \leq N_{pulses}$. If $n_{pulses}=0$, then the sending timing point is the sending start time of the K-th audio signal. If $n_{pulses}=N_{pulses}$, then the sending timing point is the sending end time of the K-th audio signal. If $0<n_{pulses}<N_{pulses}$, then the sending timing point is an intermediate time of sending the K-th audio signal.

As a result, after it is determined that the Doppler effect exists, it is possible to properly correct the receipt time of an audio signal so as to correct the propagation time of the audio signal, so that it is possible to be able to obtain a more accurate propagation time by which it is possible to more accurately conduct the TDOA based distance calculation.

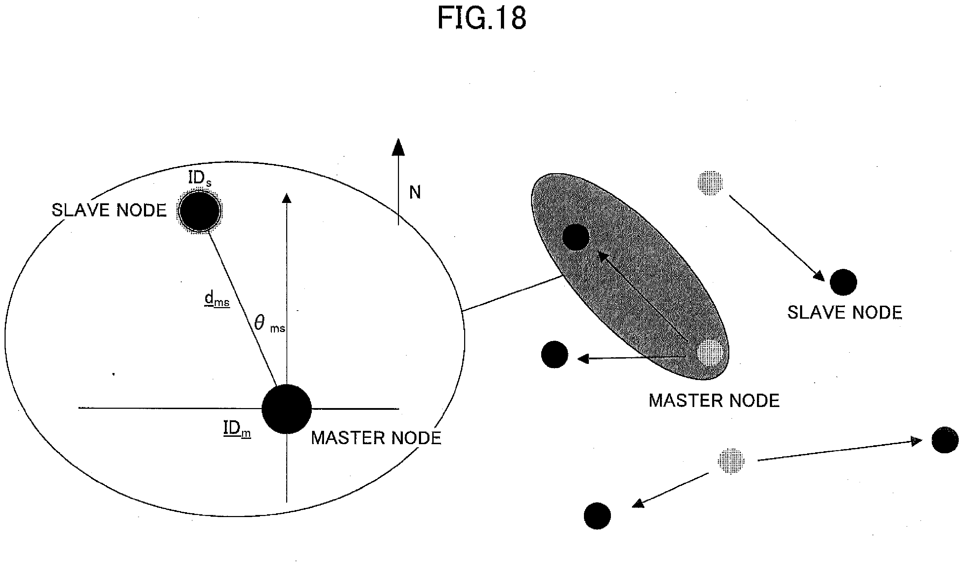

FIG. 18 illustrates how to locate a mobile node by utilizing a calculated distance and an orientation angle in inertial sensor data.

As shown in FIG. 18, it is possible to, on the basis of $d=t_s\times v=[T_{rs}-(T_{rw}+t_{ps})]\times_v$, calculate the distance between master and slave nodes. Here d refers to the distance between the master and slave nodes; v refers to the propagation velocity of an audio signal; $t_s$ refers to the propagation time delay of the audio signal; $T_{rs}$ refers to the arrival time of a first audio signal; $T_{rw}$ refers to the arrival time of a radio signal; and $t_{ps}$ refers to the processing time delay of the first audio signal. The orientation angle may be obtained by utilizing $\theta_{ms}=\theta_m-\theta_s$, on the basis of the inertial sensor data. Here $\theta_{ms}$ refers to the orientation angle of the master and slave nodes; $\theta_m$ refers to the direction of the master node (the angle deviated away from the North Pole); and $\theta_s$ refers to the direction of the slave node (the angle deviated away from the North Pole). In addition, $ID_m$ refers to the ID of the master node, and $ID_s$ refers to the ID of the slave node.

Since the roles of master and slave nodes may change all the time, and because the corresponding network structure of topology are also flexible and changeable, it is possible to locate a mobile node in a wireless work. In addition, the distance obtained according to the TDOA algorithm is one at a specific time point (e.g., the sending time of an audio signal), and on the basis of this, the distance at other time point may be obtained by utilizing the inertial sensor data to conduct tracking (i.e., to track the position of a mobile node). In particular, since the inertial sensor data includes information such as moving directions, moving velocities, and accelerations, it is possible to, by utilizing these kinds of velocities and directions, estimate the moving trajectory of a mobile node, so that it is possible to estimate a new position of the mobile node in the next time period. In this way, it is possible to track the position of the mobile node.

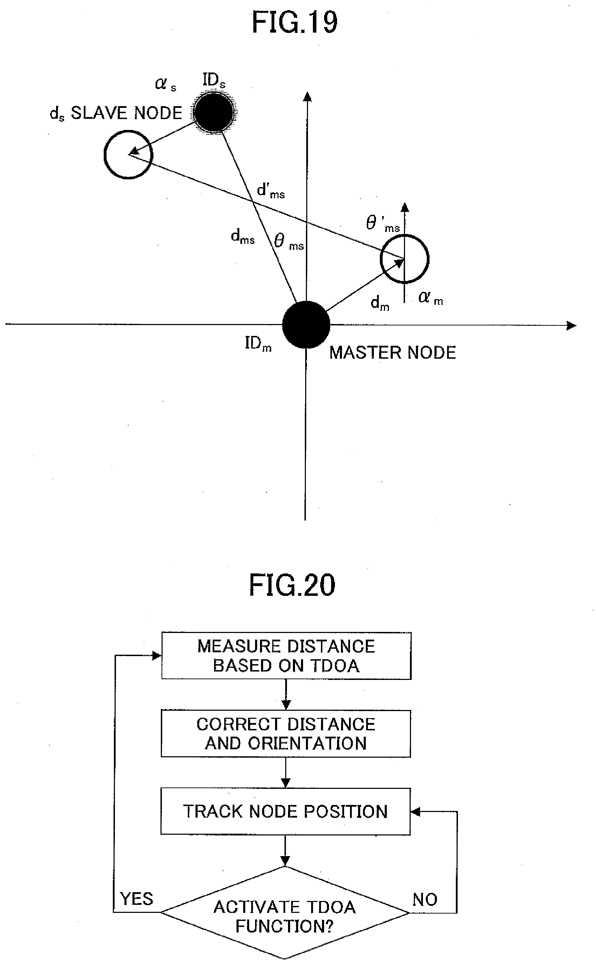

FIG. 19 illustrates how to track the position of a mobile node by utilizing inertial sensor data.

Tracking the position of a mobile node is on the basis of the inertial sensor data, and may include at least the following steps.

(a) After the inertial sensor data exchange is conducted between two mobile nodes, the distance between the two nodes may be expressed as $d'_{ms}=(d_{ms}\times \cos\theta_{ms}+d_m\times \cos\alpha_m+d_s\times \cos\alpha_s)/\cos\theta'_{ms}$. Here $d'_{ms}$ refers to the distance between the two mobile nodes, which is tracked by utilizing the inertial sensor data; $d_{ms}$ refers to the distance between the two nodes, which has been calculated according to the TDOA algorithm; $\theta_{ms}$ refers to the orientation angle at the time point of calculating the distance between the two nodes; $\theta'_{ms}$ refers to the orientation angle in the tracking process between the two nodes; $\alpha_m$ refers to the angular acceleration of the master node (the angle deviated away for the North Pole); and $\alpha_s$ refers to the angular acceleration of the slave node (the angle deviated away from the North Pole).

(b) After exchanging the inertial sensor data, the orientation angle may be expresses as $\theta'_{ms}=((\theta'_m-\theta'_s)+(\theta_{ms}+\alpha_m+\alpha_s))/2$. Here $\theta'_{ms}$ refers to the orientation angle of the two mobile nodes in the tracking process; $\theta_{ms}$ refers to the orientation angle of the two nodes at the time of calculating their distance; $\theta'_m$ refers to the direction of the master node in the tracking process (the angle deviated away from the North Pole); $\theta'_s$ refers to the direction of the slave node in the tracking process (the angle deviated away from the North Pole); $\alpha_m$ refers to the angular acceleration of the master node (the angle deviated away from the North Pole); and $\alpha_s$ refers to the angular acceleration of the slave node (the angle deviated from the North Pole). In addition, $ID_m$ refers to the ID of the master node, and the $ID_s$ refers to the ID of the slave node.

In this way, it is possible to track the position of a mobile node by utilizing the inertial sensor data.

FIG. 20 is a flowchart of a process of tracking and correcting the position of a mobile node.

As shown in FIG. 20, the process may include at least the following steps. (1) If there is not a request for conducting the TDOA based distance calculation, then the position of a mobile node is located by utilizing STEP S4 in FIG. 5. (2) If there is a request for conducting the TDOA based distance calculation, then the TDOA based distance calculation is conducted, and the distance and the orientation angle in STEP S4 in FIG. 5 are corrected so as to compensate for the cumulative error from the inertial sensor data.

In particular, the role change of master and slave nodes is on the basis of ID matching determination, thereby causing to conduct the TDOA based distance calculation once. After conducting the TDOA based distance calculation, the distance between the two nodes is calculated. By using the calculated distance, it is possible to correct the distance updated by utilizing the tracking method on the basis of the inertial sensor data, and on the basis of the corrected distance, it is possible to correct the orientation angle obtained by utilizing the tracking method on the basis of the inertial sensor data. After conducting the node position correction, the node position tracking is restarted by utilizing the inertial sensor data. In other words, if only the inertial sensor data is used to conduct the node position tracking, then the result of the node position tracking may be not incorrect due to the cumulative error from the inertial sensor data. As a result, by re-conducting the TDOA based distance measurement after a predetermined time period or after a triggering event occurs, it is possible to obtain a more accurate position so as to replace the previous incorrect position.

Therefore, by utilizing the inertial sensor data of each mobile node, it is possible to accurately determine whether the Doppler effect exists between two mobile nodes, so as to further utilize the principle of the Doppler effect to, for example, compensate (correct) the receipt frequency of an audio signal and compensate (correct) the propagation time of the audio signal from the sending node to the receipt node, so that it is possible to accurately acquire a more accurate ID decoding result, a more accurate ID matching result, and a more accurate distance measurement result. In addition, it is also possible to properly expand the decoding tolerance bandwidth of the receipt frequency of an audio signal so as to obtain a decoded result as correct as possible, and it is also possible to, by analyzing the distribution and trends of the mismatching bits of the decoded node IDs, further design a determination condition and its corresponding waiting time for resending signals so as to be able to receive a more accurate audio signal without interference.

Here it should be noted that the above respective embodiments are just exemplary ones, and the specific structure and operation of them may not be used for limiting the present invention.

Moreover, the embodiments of the present invention may be implemented in any convenient form, for example, using dedicated hardware or a mixture of dedicated hardware and software. The embodiments of the present invention may be implemented as computer software implemented by one or more networked processing apparatuses. The network may comprise any conventional terrestrial or wireless communications network, such as the Internet. The processing apparatuses may comprise any suitably programmed apparatuses such as a general purpose computer, personal digital assistant, mobile telephone (such as a WAP or 3G-compliant phone) and so on. Since the embodiments of the present invention can be implemented as software, each and every aspect of the present invention thus encompasses computer software implementable on a programmable device.

The computer software may be provided to the programmable device using any storage medium for storing processor-readable code such as a floppy disk, a hard disk, a CD ROM, a magnetic tape device or a solid state memory device.

The hardware platform includes any desired hardware resources including, for example, a central processing unit (CPU), a random access memory (RAM), and a hard disk drive (HDD). The CPU may include processors of any desired type and number. The RAM may include any desired volatile or nonvolatile memory. The HDD may include any desired nonvolatile memory capable of storing a large amount of data. The hardware resources may further include an input device, an output device, and a network device in accordance with the type of the apparatus. The HDD may be provided external to the apparatus as long as the HDD is accessible from the apparatus. In this case, the CPU, for example, the cache memory of the CPU, and the RAM may operate as a physical memory or a primary memory of the apparatus, while the HDD may operate as a secondary memory of the apparatus.

While the present invention is described with reference to the specific embodiments chosen for purpose of illustration, it should be apparent that the present invention is not limited to these embodiments.

**Claims**

1. A method of determining whether a Doppler effect exists, comprising:

   an obtainment step (S201) of obtaining inertial sensor data of each of first and second mobile nodes (100), wherein, the first mobile node (100) receives a first signal, the second mobile node (100) sends the first signal, and the first signal has a sending frequency; and a determination step (S202) of determining, by utilizing the inertial sensor data of each of the first and second mobile nodes (100), whether the Doppler effect exists between the first and second mobile nodes (100),

**characterized in that**

by utilizing the inertial sensor data of each of the first and second mobile nodes (100), projecting a moving velocity of the first mobile node (100) onto a straight line along a moving direction of the second mobile node (100);

if the projected moving direction of the first mobile node (100) is the same as the moving direction of the second mobile node (100), determining that the Doppler effect does not exist;

if the projected moving direction of the first mobile node (100) is opposite to the moving direction of the second mobile node (100), determining that the Doppler effect exist;

estimating, based on sending times of plural first signals and their corresponding second signals sent by the second mobile node (100) in a predetermined time period as well as receipt times of the plural first signals and their corresponding second signals at the first mobile node (100) in the predetermined time period, a distance change between the first and second mobile nodes (100) in the predetermined time period by utilizing a TDOA algorithm, wherein, a propagation velocity of each of the plural first signals is less than that of the corresponding second signal, and the sending time of each of the plural first signals is the same as the sending time of the corresponding second signal;

in the TDOA algorithm, two kinds of signals having different propagation velocities are be used to calculate or measure the distance between sending and receipt nodes on the basis of the propagation time between the two nodes,

if the distance change is increased, then determining that the Doppler effect is a depart-each other one; and

if the distance change is decreased, then determining that the Doppler effect is an approach-each other one.

2. The method according claim 1, further comprising:

a first correction step of, if the Doppler effect exists, correcting, based on a principle of the Doppler effect, a receipt frequency of the first signal,

wherein,

the sending frequency of the first signal is used to encode a piece of information, and the corrected receipt frequency of the first signal is used to decode the piece of information.

3. The method according to claim 1, further comprising:

a second correction step of, if the Doppler effect exists, correcting, based on a principle of the Doppler effect, a distance between the first and second mobile nodes, which is calculated by utilizing a TDOA algorithm.

4. The method according to claim 3, wherein, the second correction step includes:

receiving, by the first mobile node (100), first and second signals simultaneously sent from the second mobile node (100), wherein, a propagation velocity of the first signal is less than that of the second signal, each of the first and second signals carries an ID of the second mobile node (100), and regarding the first signal, different sending frequencies are used to encode different bits of the ID;

correcting receipt frequencies of the first signal based on the principle of the Doppler effect;

decoding the ID carried in the first signal by utilizing the corrected receipt frequencies of the first signal;

decoding the ID carried in the second signal;

determining whether the decoded IDs from the first and second signals match each other; and

if the decoded IDs from the first and second signals match each other, then calculating the distance between the first and second mobile nodes (100) by utilizing a receipt time and a propagation velocity of each of the first and second signals, wherein, the receipt time of the first signal is corrected based on the principle of the Doppler effect.

5. The method according to claim 4, wherein, the decoding the ID carried in the first signal by utilizing the corrected receipt frequencies of the first signal includes:

expanding a frequency decoding tolerance bandwidth of the first signal so as to obtain plural decoded IDs from the first signal,

wherein,

the second correction step further includes

comparing each of the obtained plural decoded IDs from the first signal with the decoded ID from the second signal; and

if there is one of the obtained plural decoded IDs from the first signal that matches the decoded ID from the second signal, then determining that the IDs carried in the first and second signals match each other, otherwise, causing the second mobile node to resend the first signal carrying the ID encoded by the sending frequencies of the first signal.

6. The method according to claim 5, wherein, the causing the second mobile node (100) to resend the first signal carrying the ID encoded by the different sending frequencies of the first signal includes:

calculating a sum of absolute differences of the mismatching decoded IDs and an absolute difference of differences of mismatching bits of the mismatching decoded IDs;

if the sum is less than or equal to $N_{ID}$, and the absolute difference is less than or equal to 1, then after $t_w=0$, causing the second mobile node to resend the first signal carrying the ID encoded by the different sending frequencies of the first signal;

if the sum is less than or equal to $N_{ID}$, and the absolute difference is greater than 1, then after $t_w=(1/f_j)\times N_{pulses}$, causing the second mobile node to resend the first signal carrying the ID encoded by the different sending frequencies of the first signal;

if the sum is greater than $N_{ID}$, and the absolute difference is less than or equal to 1, then after $t_w=(1/(\Sigma_i f_i/N_{ID}))\times N_{pulses}\times N_{ID}$, causing the second mobile node to resend the first signal carrying the ID encoded by the different sending frequencies of the first signal; and

if the sum is greater than $N_{ID}$, and the absolute difference is greater than 1, then after $t_w=(1/(\Sigma_i f_i/N_{ID}))\times N_{pulses}\times N_{ID}+(1/f_j)\times N_{pulses}$, causing the second mobile node to resend the first signal carrying the ID encoded by the different sending frequencies of the first signal,

wherein,

$t_w$ is a waiting time delay; $f_i$ is a receipt frequency of an audio signal; $f_j$ is a receipt frequency of an audio signal whose relevant absolute difference of differences of mismatching bits of the mismatching decoded IDs is maximum; $N_{pulses}$ is a number of pulses of each sending frequency related audio signal; and $N_{ID}$ is the number of bits of the ID.

7. The method according to claim 3, wherein, the second correction step includes:

if a sending time $T_K$ of a K-th audio signal at the first mobile node (100) serves as a sending timing point, and an intermediate time $t_K$ of receiving the K-th audio signal at the second mobile node serves as a receipt timing point, then correcting a propagation time of the K-th audio signal from the first mobile node to the second mobile node (100) to

$$\Delta T=t_K-T_k$$
$$=(t_K-(1/f_K')\times n_{pulses})-(T_1+\Sigma_1^{(K-1)}((1/f_i)\times N_{pulses})+(1/f_K)\times n_{pulses})$$
$$=t_K-[\Sigma_1^{(K-1)}((1/f_i)\times N_{pulses})+((1/f_K)+(1/f_K'))\times n_{pulses}],$$

wherein,

$f_i$ is a sending frequency of an i-th audio signal; i is a positive integer less than K; $f_K$ is a sending frequency of the K-th audio signal; $f_K'$ is a receipt frequency of the K-th audio signal; K is a positive integer; $n_{pulses}$ is a number of pulses of each encoding frequency related audio signal, which have been sent from the sending time; $N_{pulses}$ refers to a total number of pulses of each encoding frequency related audio signal; and $0\leqq n_{pulses}\leqq N_{pulses}$,

wherein,

if $n_{pulses}=0$, that means the sending timing point is a sending start time of the K-th audio signal at the first mobile node (100);

if $n_{pulses}=N_{pulses}$, that means the sending timing point is a sending end time of the K-th audio signal at the first mobile node (100); and

if $0<n_{pulses}<N_{pulses}$, that means the sending timing point is an intermediate time of sending the K-th audio signal at the first mobile node (100).

8. The method according to claim 3, further comprising:

by utilizing the inertial sensor data of each of the first and second mobile nodes (100), obtaining an orientation angle between the first and second mobile nodes (100); and

locating, based on the orientation angle and the corrected distance between the first and second mobile nodes (100), the first mobile node (100).

9. A system (300) for determining whether a Doppler effect exists, comprising:

an obtainment device (301) configured to obtain inertial sensor data of each of first and second mobile nodes (100), wherein, the first mobile node (100) receives a first signal, the second mobile node (100) sends the first signal, and the first signal has a sending frequency; and
a determination device (302) configured to determine, by utilizing the inertial sensor data of each of the first and second mobile nodes (100), whether the Doppler effect exists between the first and second mobile nodes (100),
**characterized in that**
determining includes:

by utilizing the inertial sensor data of each of the first and second mobile nodes (100), projecting a moving velocity of the first mobile node (100) onto a straight line along a moving direction of the second mobile node (100);
if the projected moving direction of the first mobile node (100) is the same as the moving direction of the second mobile node (100), determining that the Doppler effect does not exist;
if the projected moving direction of the first mobile node (100) is opposite to the moving direction of the second mobile node (100), determining that the Doppler effect exist;
estimating, based on sending times of plural first signals and their corresponding second signals sent by the second mobile node (100) in a predetermined time period as well as receipt times of the plural first signals and their corresponding second signals at the first mobile node (100) in the predetermined time period, a distance change between the first and second mobile nodes (100) in the predetermined time period by utilizing a TDOA algorithm, wherein, a propagation velocity of each of the plural first signals is less than that of the corresponding second signal, and the sending time of each of the plural first signals is the same as the sending time of the corresponding second signal; in the TDOA algorithm, two kinds of signals having different propagation velocities are be used to calculate or measure the distance between sending and receipt nodes on the basis of the propagation time between the two nodes,
if the distance change is increased, then determining that the Doppler effect is a depart-each other one; and
if the distance change is decreased, then determining that the Doppler effect is an approach-each other one.

## Patentansprüche

1. Verfahren zum Bestimmen, ob ein Doppler-Effekt vorhanden ist, das Folgendes umfasst:

einen Erhaltungsschritt (S201) des Erhaltens von Trägheitssensordaten jeweils von einem ersten und einem zweiten mobilen Knoten (100), wobei der erste mobile Knoten (100) ein erstes Signal empfängt, der zweite mobile Knoten (100) das erste Signal sendet und das erste Signal eine Sendefrequenz besitzt;
einen Bestimmungsschritt (S202) des Bestimmens unter Nutzung der Trägheitssensordaten vom ersten bzw. vom zweiten mobilen Knoten (100), ob der Doppler-Effekt zwischen dem ersten und dem zweiten mobilen Knoten (100) vorhanden ist,
**gekennzeichnet durch**
Projizieren einer Bewegungsgeschwindigkeit des ersten mobilen Knotens (100) auf eine gerade Linie entlang einer Bewegungsrichtung des zweiten mobilen Knotens (100) unter Nutzung der Trägheitssensordaten vom ersten bzw. vom zweiten mobilen Knoten (100);
Bestimmen, dass der Doppler-Effekt nicht vorhanden ist, falls die projizierte Bewegungsrichtung des ersten mobilen Knotens (100) dieselbe wie die Bewegungsrichtung des zweiten mobilen Knotens (100) ist;
Bestimmen, dass der Doppler-Effekt vorhanden ist, falls die projizierte Bewegungsrichtung des ersten mobilen Knotens (100) zu der Bewegungsrichtung des zweiten mobilen Knotens (100) entgegengesetzt ist;
Schätzen auf der Grundlage der Sendezeiten von mehreren ersten Signalen und ihren entsprechenden zweiten Signalen, die durch den zweiten mobilen Knoten (100) in einem vorgegebenen Zeitraum gesendet werden, sowie der Empfangszeiten der mehreren ersten Signale und ihrer entsprechenden zweiten Signale am ersten mobilen Knoten (100) im vorgegebenen Zeitraum, einer Abstandsänderung zwischen dem ersten und dem zweiten mobilen Knoten (100) im vorgegebenen Zeitraum unter Nutzung eines TDOA-Algorithmus, wobei eine Ausbreitungsgeschwindigkeit von jedem der mehreren ersten Signale kleiner als jene des entsprechenden zweiten Signals ist und die Sendezeit von jedem der mehreren ersten Signale dieselbe wie die Sendezeit des entsprechenden zweiten Signals ist;
wobei im TDOA-Algorithmus zwei Arten von Signalen mit unterschiedlichen Ausbreitungsgeschwindigkeiten verwendet werden, um auf der Grundlage der Ausbreitungszeit zwischen den zwei Knoten den Abstand zwischen dem Sendeknoten und dem Empfangsknoten zu berechnen oder zu messen,

dann, wenn die Abstandsänderung größer geworden ist, Bestimmen, dass der Doppler-Effekt einer des Sich-Voneinander-Entfernens ist; und

dann, wenn die Abstandsänderung kleiner geworden ist, Bestimmen, dass der Doppler-Effekt einer des Sich-Einander-Näherns ist.

2. Verfahren nach Anspruch 1, das ferner Folgendes umfasst:

einen ersten Korrekturschritt des Korrigierens dann, wenn der Doppler-Effekt vorhanden ist, einer Empfangsfrequenz des ersten Signals auf der Grundlage des Prinzips des Doppler-Effekts,
wobei
die Sendefrequenz des ersten Signals verwendet wird, um eine Informationskomponente zu codieren und die korrigierte Empfangsfrequenz des ersten Signals verwendet wird, um die Informationskomponente zu decodieren.

3. Verfahren nach Anspruch 1, das ferner Folgendes umfasst:
einen zweiten Korrekturschritt des Korrigierens dann, wenn der Doppler-Effekt vorhanden ist, eines Abstands zwischen dem ersten und dem zweiten mobilen Knoten auf der Grundlage eines Prinzips des Doppler-Effekts, der unter Nutzung eines TDOA-Algorithmus berechnet wird.

4. Verfahren nach Anspruch 3, wobei der zweite Korrekturschritt Folgendes enthält:

Empfangen durch den ersten mobilen Knoten (100) eines ersten und eines zweiten Signals, die vom zweiten mobilen Knoten (100) gleichzeitig gesendet werden, wobei eine Ausbreitungsgeschwindigkeit des ersten Signals kleiner als jene des zweiten Signals ist, das erste und das zweite Signal jeweils eine ID des zweiten mobilen Knotens (100) führen und bezüglich des ersten Signals unterschiedliche Sendefrequenzen verwendet werden, um die verschiedenen Bits der ID zu codieren;
Korrigieren der Empfangsfrequenzen des ersten Signals auf der Grundlage des Prinzips des Doppler-Effekts;
Decodieren der ID, die im ersten Signal geführt wird, unter Nutzung der korrigierten Empfangsfrequenzen des ersten Signals;
Decodieren der ID, die im zweiten Signal geführt wird;
Bestimmen, ob die decodierten ID vom ersten und zweiten Signal miteinander übereinstimmen; und
dann, wenn die decodierten ID vom ersten und zweiten Signal miteinander übereinstimmen, Berechnen des Abstands zwischen dem ersten und dem zweiten mobilen Knoten (100) unter Nutzung einer Empfangszeit und einer Ausbreitungsgeschwindigkeit des ersten bzw. des zweiten Signals, wobei die Empfangszeit des ersten Signals auf der Grundlage des Prinzips des Doppler-Effekts korrigiert wird.

5. Verfahren nach Anspruch 4, wobei das Decodieren der ID, die im ersten Signal geführt wird, unter Nutzung der korrigierten Empfangsfrequenzen des ersten Signals Folgendes umfasst:

Erweitern einer Frequenzdecodierungs-Toleranzbandbreite des ersten Signals, um mehrere decodierte ID aus dem ersten Signal zu erhalten,
wobei
der zweite Korrekturschritt ferner Folgendes enthält:

Vergleichen jeder der erhaltenen mehreren decodierten ID aus dem ersten Signal mit der decodierten ID aus dem zweiten Signal; und
dann, wenn eine der erhaltenen mehreren decodierten ID aus dem ersten Signal vorhanden ist, die mit der decodierten ID aus dem zweiten Signal übereinstimmt, Bestimmen, dass die ID, die im ersten und zweiten Signal geführt werden, miteinander übereinstimmen, andernfalls Bewirken, dass der zweite mobile Knoten das erste Signal, das die ID führt, die durch die Sendefrequenzen des ersten Signals codiert ist, erneut sendet.

6. Verfahren nach Anspruch 5, wobei das Bewirken, dass der zweite mobile Knoten (100) das erste Signal, das die ID führt, die durch die unterschiedlichen Sendefrequenzen des ersten Signals codiert ist, erneut sendet, Folgendes enthält:

Berechnen einer Summe der absoluten Differenzen der nicht übereinstimmenden, decodierten ID und einer absoluten Differenz der Differenzen der nicht übereinstimmenden Bits der nicht übereinstimmenden, decodierten ID;

dann, wenn die Summe kleiner oder gleich $N_{ID}$ ist und die absolute Differenz kleiner oder gleich 1 ist, nach $t_w$ = 0 Bewirken, dass der zweite mobile Knoten das erste Signal, das die ID führt, die durch die unterschiedlichen Sendefrequenzen des ersten Signals codiert ist, erneut sendet;

dann, wenn die Summe kleiner oder gleich $N_{ID}$ ist und die absolute Differenz größer als 1 ist, nach $t_w$ = (1 / $f_j$) $\times$ $N_{impulse}$ Bewirken, dass der zweite mobile Knoten das erste Signal, das die ID führt, die durch die unterschiedlichen Sendefrequenzen des ersten Signals codiert ist, erneut sendet;

dann, wenn die Summe größer als $N_{ID}$ ist und die absolute Differenz kleiner oder gleich 1 ist, nach $t_w$ = $1/(\sum_i f_i/N_{ID}))\times N_{impulse}\times N_{ID}$ Bewirken, dass der zweite mobile Knoten das erste Signal, das die ID führt, die durch die unterschiedlichen Sendefrequenzen des ersten Signals codiert ist, erneut sendet; und

dann, wenn die Summe größer als $N_{ID}$ ist und die absolute Differenz größer als 1 ist, nach $t_w$ = $(1/(\sum_i f_i/N_{ID}))\times N_{impulse}\times N_{ID}+(1/f_j)\times N_{impulse}$ Bewirken, dass der zweite mobile Knoten das erste Signal, das die ID führt, die durch die unterschiedlichen Sendefrequenzen des ersten Signals codiert ist, erneut sendet,
wobei

$t_w$ eine Wartezeitverzögerung ist; $f_i$ eine Empfangsfrequenz eines Audiosignals ist; $f_j$ eine Empfangsfrequenz eines Audiosignals ist, dessen relevante absolute Differenz der Differenzen der nicht übereinstimmenden Bits der nicht übereinstimmenden, decodierten ID maximal ist; $N_{impulse}$ eine Anzahl der Impulse jedes auf die Sendefrequenz bezogenen Audiosignals ist; und $N_{ID}$ die Anzahl der Bits der ID ist.

**7.** Verfahren nach Anspruch 3, wobei der zweite Korrekturschritt Folgendes enthält:

dann, wenn eine Sendezeit $T_K$ eines K-ten Audiosignals am ersten mobilen Knoten (100) als ein Sendezeitvorgabepunkt dient und eine Zwischenzeit $t_K$ des Empfangens des K-ten Audiosignals am zweiten mobilen Knoten als ein Empfangszeitvorgabepunkt dient, Korrigieren einer Ausbreitungszeit des K-ten Audiosignals vom ersten mobilen Knoten an den zweiten mobilen Knoten (100) auf

$$\Delta T = t_K - T_K$$
$$= \left(t_K - \left(1/f_K'\right)\times n_{impulse}\right) - \left(T_1 + \sum_1^{(K-1)}\left(\left(1/f_i\right)\times N_{impulse}\right) + \left(1/f_K\right)\times n_{impulse}\right)$$
$$= t_K - \left[\sum_1^{(K-1)}\left(\left(1/f_i\right)\times N_{impulse}\right) + \left(\left(1/f_K\right) + \left(1/f_K'\right)\right)\times n_{impulse}\right]$$

wobei

$f_i$ eine Sendefrequenz eines i-ten Audiosignals ist, i eine positive Ganzzahl kleiner als K ist; $f_K$ eine Sendefrequenz des K-ten Audiosignals ist; $f_K'$ eine Empfangsfrequenz des K-ten Audiosignals ist; K eine positive Ganzzahl ist; $n_{impulse}$ eine Anzahl der Impulse jedes auf die Codierungsfrequenz bezogenen Audiosignals ist, die seit der Sendezeit gesendet worden sind; $N_{impulse}$ sich auf eine Gesamtanzahl der Impulse jedes auf die Codierungsfrequenz bezogenen Audiosignals bezieht; und $0 \leq n_{impulse} \leq N_{impulse}$,
wobei

dann, wenn $n_{impulse}$ = 0, das bedeutet, dass der Sendezeitvorgabepunkt eine Sendestartzeit des K-ten Audiosignals am ersten mobilen Knoten (100) ist;

dann, wenn $n_{impulse}$ = $N_{impulse}$, das bedeutet, dass der Sendezeitvorgabepunkt eine Sendeendzeit des K-ten Audiosignals am ersten mobilen Knoten (100) ist; und

dann, wenn $0 < n_{impulse} < N_{impulse}$, das bedeutet, dass der Sendezeitvorgabepunkt eine Zwischenzeit des Sendens des K-ten Audiosignals am ersten mobilen Knoten (100) ist.

**8.** Verfahren nach Anspruch 3, das ferner Folgendes umfasst:

unter Nutzung der Trägheitssensordaten vom ersten bzw. vom zweiten mobilen Knoten (100) Erhalten eines Ausrichtungswinkels zwischen dem ersten und dem zweiten mobilen Knoten (100); und
Lokalisieren des ersten mobilen Knotens (100) auf der Grundlage des Ausrichtungswinkels und des korrigierten Abstands zwischen dem ersten und dem zweiten mobilen Knoten (100).

**9.** System (300) zum Bestimmen, ob ein Doppler-Effekt vorhanden ist, das Folgendes umfasst:

eine Erhaltungsvorrichtung (301), die konfiguriert ist, Trägheitssensordaten von einem ersten bzw. von einem zweiten mobilen Knoten (100) zu erhalten, wobei der erste mobile Knoten (100) ein erstes Signal empfängt, der zweite mobile Knoten (100) das erste Signal sendet und das erste Signal eine Sendefrequenz besitzt;
eine Bestimmungsvorrichtung (302), die konfiguriert ist, unter Nutzung der Trägheitssensordaten vom ersten bzw. vom zweiten mobilen Knoten (100) zu bestimmen, ob zwischen dem ersten und dem zweiten mobilen Knoten (100) der Doppler-Effekt vorhanden ist,
**dadurch gekennzeichnet, dass**
das Bestimmen Folgendes umfasst:

Projizieren einer Bewegungsgeschwindigkeit des ersten mobilen Knotens (100) auf eine gerade Linie entlang einer Bewegungsrichtung des zweiten mobilen Knotens (100) unter Nutzung der Trägheitssensordaten vom ersten bzw. vom zweiten mobilen Knoten (100);
Bestimmen, dass der Doppler-Effekt nicht vorhanden ist, falls die projizierte Bewegungsrichtung des ersten mobilen Knotens (100) dieselbe wie die Bewegungsrichtung des zweiten mobilen Knotens (100) ist;
Bestimmen, dass der Doppler-Effekt vorhanden ist, falls die projizierte Bewegungsrichtung des ersten mobilen Knotens (100) der Bewegungsrichtung des zweiten mobilen Knotens (100) entgegengesetzt ist;
Schätzen auf der Grundlage der Sendezeiten von mehreren ersten Signalen und ihren entsprechenden zweiten Signalen, die durch den zweiten mobilen Knoten (100) in einem vorgegebenen Zeitraum gesendet werden, sowie der Empfangszeiten der mehreren ersten Signale und ihrer entsprechenden zweiten Signale am ersten mobilen Knoten (100) im vorgegebenen Zeitraum, einer Abstandsänderung zwischen dem ersten und dem zweiten mobilen Knoten (100) im vorgegebenen Zeitraum unter Nutzung eines TDOA-Algorithmus, wobei eine Ausbreitungsgeschwindigkeit von jedem der mehreren ersten Signale kleiner als jene des entsprechenden zweiten Signals ist und die Sendezeit von jedem der mehreren ersten Signale dieselbe wie die Sendezeit des entsprechenden zweiten Signals ist;
wobei im TDOA-Algorithmus zwei Arten von Signalen mit verschiedenen Ausbreitungsgeschwindigkeiten verwendet werden, um auf der Grundlage der Ausbreitungszeit zwischen den zwei Knoten den Abstand zwischen dem Sendeknoten und dem Empfangsknoten zu berechnen oder zu messen,
Bestimmen, dass der Doppler-Effekt einer des Sich-Voneinander-Entfernens ist, falls die Abstandsänderung größer geworden ist; und
Bestimmen, dass der Doppler-Effekt einer des Sich-Einander-Näherns ist, falls die Abstandsänderung kleiner geworden ist.

**Revendications**

**1.** Procédé de détermination qu'un effet Doppler existe ou n'existe pas, comprenant :

une étape d'obtention (S201) de l'obtention de données de capteur inertiel de chacun de premier et second noeuds mobiles (100), dans lequel le premier noeud mobile (100) reçoit un premier signal, le second noeud mobile (100) envoie le premier signal, et le premier signal a une fréquence d'envoi ; et
une étape de détermination (S202) de la détermination, en utilisant les données de capteur inertiel de chacun des premier et second noeuds mobiles (100), que l'effet Doppler existe ou n'existe pas entre les premier et second noeuds mobiles (100),
**caractérisé par**
en utilisant les données de capteur inertiel de chacun des premier et second noeuds mobiles (100), la projection d'une vitesse de mouvement du premier noeud mobile (100) sur une ligne droite le long d'une direction de mouvement du second noeud mobile (100) ;
si la direction de mouvement projetée du premier noeud mobile (100) est la même que la direction de mouvement du second noeud mobile (100), la détermination que l'effet Doppler n'existe pas ;
si la direction de mouvement projetée du premier noeud mobile (100) est opposée à la direction de mouvement du second noeud mobile (100), la détermination que l'effet Doppler existe ;
l'estimation, sur la base de temps d'envoi de multiples premiers signaux et de leurs seconds signaux correspondants envoyés par le second noeud mobile (100) dans une période prédéterminée ainsi que de temps de réception des multiples premiers signaux et de leurs seconds signaux correspondants, au premier noeud mobile (100), dans la période prédéterminée, d'un changement de distance entre les premier et second noeuds mobiles (100) dans la période prédéterminée en utilisant un algorithme TDOA, dans lequel une vitesse de propagation de chacun des multiples premiers signaux est inférieure à celle du second signal correspondant, et le temps d'envoi de chacun des multiples premiers signaux est le même que le temps d'envoi du second signal correspondant ;

dans l'algorithme TDOA, deux types de signaux ayant des vitesses de propagation différentes sont utilisés pour calculer ou mesurer la distance entre des noeuds d'envoi et de réception sur la base du temps de propagation entre les deux noeuds,

si le changement de distance est augmenté, alors la détermination que l'effet Doppler est un effet de genre qui s'éloigne ; et

si le changement de distance est réduit, alors la détermination que l'effet Doppler est un effet de genre qui se rapproche.

2. Procédé selon la revendication 1, comprenant en outre :

une première étape de correction de, si l'effet Doppler existe, la correction, sur la base d'un principe de l'effet Doppler, d'une fréquence de réception du premier signal,

dans lequel

la fréquence d'envoi du premier signal est utilisée pour encoder un élément d'informations, et la fréquence de réception corrigée du premier signal est utilisée pour décoder l'élément d'informations.

3. Procédé selon la revendication 1, comprenant en outre :
une seconde étape de correction de, si l'effet Doppler existe, la correction, sur la base d'un principe de l'effet Doppler, d'une distance entre les premier et second noeuds mobiles, qui est calculée en utilisant un algorithme TDOA.

4. Procédé selon la revendication 3, dans lequel la seconde étape de correction inclut :

la réception, par le premier noeud mobile (100), de premier et second signaux simultanément envoyés à partir du second noeud mobile (100), dans lequel une vitesse de propagation du premier signal est inférieure à celle du second signal, chacun des premier et second signaux porte un ID du second noeud mobile (100), et, concernant le premier signal, des fréquences d'envoi différentes sont utilisées pour encoder des bits différents de l'ID ;

la correction de fréquences de réception du premier signal sur la base du principe de l'effet Doppler ;

le décodage de l'ID porté dans le premier signal en utilisant les fréquences de réception corrigées du premier signal ;

le décodage de l'ID porté dans le second signal ;

la détermination que les IDs décodés des premier et second signaux correspondent, ou ne correspondent pas, l'un à l'autre ; et

si les IDs décodés des premier et second signaux correspondent l'un à l'autre, alors le calcul de la distance entre les premier et second noeuds mobiles (100) en utilisant un temps de réception et une vitesse de propagation de chacun des premier et second signaux, dans lequel le temps de réception du premier signal est corrigé sur la base du principe de l'effet Doppler.

5. Procédé selon la revendication 4, dans lequel le décodage de l'ID porté dans le premier signal en utilisant les fréquences de réception corrigées du premier signal inclut :

l'expansion d'une largeur de bande de tolérance de décodage de fréquence du premier signal afin d'obtenir de multiples IDs décodés du premier signal,

dans lequel

la seconde étape de correction inclut en outre

la comparaison de chacun des multiples IDs décodés obtenus du premier signal à l'ID décodé du second signal ; et

s'il y a un des multiples IDs décodés obtenus du premier signal qui correspond à l'ID décodé du second signal, alors la détermination que les IDs portés dans les premier et second signaux correspondent l'un à l'autre, autrement, l'exigence que le second noeud mobile renvoie le premier signal portant l'ID encodé par les fréquences d'envoi du premier signal.

6. Procédé selon la revendication 5, dans lequel l'exigence que le second noeud mobile (100) renvoie le premier signal portant l'ID encodé par les fréquences d'envoi différentes du premier signal inclut :

le calcul d'une somme de différences absolues des IDs décodés ne correspondant pas et d'une différence absolue de différences de bits ne correspondant pas des IDs décodés ne correspondant pas ;

si la somme est inférieure ou égale à $N_{ID}$, et la différence absolue est inférieure ou égale à 1, alors, après $t_w$=0, l'exigence que le second noeud mobile renvoie le premier signal portant l'ID encodé par les fréquences d'envoi différentes du premier signal ;

si la somme est inférieure ou égale à $N_{ID}$, et la différence absolue est supérieure à 1, alors, après $t_w$=(l/$f_j$)×$N_{pulses}$, l'exigence que le second noeud mobile renvoie le premier signal portant l'ID encodé par les fréquences d'envoi différentes du premier signal ;

si la somme est supérieure à $N_{ID}$, et la différence absolue est inférieure ou égale à 1, alors, après $t_w$=(1/($\sum_i$-$f_i$/$N_{ID}$))×$N_{pulses}$×$N_{ID}$, l'exigence que le second noeud mobile renvoie le premier signal portant l'ID encodé par les fréquences d'envoi différentes du premier signal ; et

si la somme est supérieure à $N_{ID}$, et la différence absolue est supérieure à 1, alors, après $t_w$=(1/($\sum_i$-$f_i$/$N_{ID}$))×$N_{pulses}$×$N_{ID}$+(1/$f_j$)×$N_{pulses}$, l'exigence que le second noeud mobile renvoie le premier signal portant l'ID encodé par les fréquences d'envoi différentes du premier signal,

dans lequel

$t_w$ est un délai d'attente ; $f_i$ est une fréquence de réception d'un signal audio ; $f_j$ est une fréquence de réception d'un signal audio dont la différence absolue pertinente de différences de bits ne correspondant pas des IDs décodés ne correspondant pas est au maximum ; $N_{pulses}$ est un nombre d'impulsions de chaque signal audio connexe à la fréquence d'envoi; et $N_{ID}$ est le nombre de bits de l'ID.

**7.** Procédé selon la revendication 3, dans lequel la seconde étape de correction inclut :

si un temps d'envoi $T_K$ d'un K-ième signal audio, au premier noeud mobile (100), sert de point de synchronisation d'envoi, et un temps intermédiaire $t_K$ de la réception du K-ième signal audio, au second noeud mobile, sert de point de synchronisation de réception, alors la correction d'un temps de propagation du K-ième signal audio, depuis le premier noeud mobile jusqu'au second noeud mobile (100), à

$$\Delta T = t_K - T_K$$
$$= (t_K - 1/f_K') \times n_{pulses}) - (T_1 + \Sigma_1^{(K-1)}((1/f_i) \times N_{pules}) + (1/f_K) \times n_{pulses})$$
$$= t_K - [\Sigma_1^{(K-1)}((1/f_i) \times N_{pulses}) + ((1/f_K) + (l/f_K')) \times n_{pulses}],$$

dans lequel

$f_i$ est une fréquence d'envoi d'un i-ième signal audio ; i est un nombre entier relatif positif inférieur à K; $f_K$ est une fréquence d'envoi du K-ième signal audio ; $f_K'$ est une fréquence de réception du K-ième signal audio ; K est un nombre entier relatif positif ; $n_{pulses}$ est un nombre d'impulsions de chaque signal audio connexe à la fréquence d'encodage, qui ont été envoyées depuis le temps d'envoi ; $N_{pulses}$ fait référence à un nombre total d'impulsions de chaque signal audio connexe à la fréquence d'encodage ; et $0 \leq n_{pulses} \leq N_{pulses}$,

dans lequel

si $n_{pulses}$=0, ceci signifie que le point de synchronisation d'envoi est un temps de début d'envoi du K-ième signal audio, au premier noeud mobile (100) ;

si $n_{pulses}$=$N_{pulses}$, ceci signifie que le point de synchronisation d'envoi est un temps de fin d'envoi du K-ième signal audio, au premier noeud mobile (100) ; et

si $0<n_{pulses}<N_{pulses}$, ceci signifie que le point de synchronisation d'envoi est un temps intermédiaire de l'envoi du K-ième signal audio, au premier noeud mobile (100).

**8.** Procédé selon la revendication 3, comprenant en outre :

en utilisant les données de capteur inertiel de chacun des premier et second noeuds mobiles (100), l'obtention d'un angle d'orientation entre les premier et second noeuds mobiles (100) ; et

la localisation, sur la base de l'angle d'orientation et de la distance corrigée entre les premier et second noeuds mobiles (100), du premier noeud mobile (100).

**9.** Système (300) pour déterminer qu'un effet Doppler existe ou n'existe pas, comprenant :

un dispositif d'obtention (301) configuré pour obtenir des données de capteur inertiel de chacun de premier et second noeuds mobiles (100), dans lequel le premier noeud mobile (100) reçoit un premier signal, le second noeud mobile (100) envoie le premier signal, et le premier signal a une fréquence d'envoi ; et

un dispositif de détermination (302) configuré pour déterminer, en utilisant les données de capteur inertiel de chacun des premier et second noeuds mobiles (100), que l'effet Doppler existe ou n'existe pas entre les premier et second noeuds mobiles (100),

**caractérisé en ce que**

la détermination inclut :

en utilisant les données de capteur inertiel de chacun des premier et second noeuds mobiles (100), la projection d'une vitesse de mouvement du premier noeud mobile (100) sur une ligne droite le long d'une direction de mouvement du second noeud mobile (100) ;

si la direction de mouvement projetée du premier noeud mobile (100) est la même que la direction de mouvement du second noeud mobile (100), la détermination que l'effet Doppler n'existe pas ;

si la direction de mouvement projetée du premier noeud mobile (100) est opposée à la direction de mouvement du second noeud mobile (100), la détermination que l'effet Doppler existe ;

l'estimation, sur la base de temps d'envoi de multiples premiers signaux et de leurs seconds signaux correspondants envoyés par le second noeud mobile (100) dans une période prédéterminée ainsi que de temps de réception des multiples premiers signaux et de leurs seconds signaux correspondants, au premier noeud mobile (100), dans la période prédéterminée, d'un changement de distance entre les premier et second noeuds mobiles (100) dans la période prédéterminée en utilisant un algorithme TDOA, dans lequel une vitesse de propagation de chacun des multiples premiers signaux est inférieure à celle du second signal correspondant, et le temps d'envoi de chacun des multiples premiers signaux est le même que le temps d'envoi du second signal correspondant ; dans l'algorithme TDOA, deux types de signaux ayant des vitesses de propagation différentes sont utilisés pour calculer ou mesurer la distance entre des noeuds d'envoi et de réception sur la base du temps de propagation entre les deux noeuds,

si le changement de distance est augmenté, alors la détermination que l'effet Doppler est un effet de genre qui s'éloigne ; et

si le changement de distance est réduit, alors la détermination que l'effet Doppler est un effet de genre qui se rapproche.

# FIG.1

140

COORDINATOR

CURRENT
WIRELESS
NETWORK

120

NODE

100

# FIG.2

| OBTAIN INERTIAL SENSOR DATA OF EACH NODE | S201 |

↓

| DETERMINE WHETHER DOPPLER EFFECT EXISTS | S202 |

# FIG.3

300

| 301 | 302 |
| OBTAINMENT DEVICE | DETERMINATION DEVICE |

# FIG.4

100

| U7 | U1 | U4 | U2 |
|---|---|---|---|
| | | TIMER | WIRELSS NETWORK ESTABLISHMENT UNIT |

| | | U6 | U3 |
|---|---|---|---|
| POWER SUPPLY | PROCESSING UNIT | STORAGE | AUDIO SIGNAL PROCESSING UNIT |

U5

INERTIAL SENSOR

# FIG.5

ESTABLISH WIRELESS NETWORK — S1

CONDUCT TDOA BASED DISTANCE MEASUREMENT — S2

LOCATE NODE — S3

TRACK NODE — S4

CORRECT NODE POSITION — S5

# FIG.6

# FIG.7

<u>200</u>

ENCODING AND DECODING UNIT  — 21

ERROR COMPENSATION UNIT — 24

ID MATCHING UNIT — 25

CONFLICT HANDLING UNIT — 26

TIME DELAY COMPENSATION UNIT — 22

DISTANCE CALCULATION UNIT — 23

FIG.8

# FIG.9

MASTER NODE

RADIO SIGNAL      AUDIO SIGNAL

SLAVE NODE

EXCHANGE INERTIAL SENSOR DATA

| 0 | 1 | 2 | 3 | 4 | 5 | 6 | 7 | 8 | 9 | A | B | C | D | E | F |
|---|---|---|---|---|---|---|---|---|---|---|---|---|---|---|---|
| $f_1$ | $f_2$ | $f_3$ | $f_4$ | $f_5$ | $f_6$ | $f_7$ | $f_8$ | $f_9$ | $f_{10}$ | $f_{11}$ | $f_{12}$ | $f_{13}$ | $f_{14}$ | $f_{15}$ | $f_{16}$ |

EP 2 975 425 B1

## FIG.10

| MASTER NODE | SLAVE NODE | TIME AXIS |

$$S221$$

```
MASTER NODE                SLAVE NODE                    TIME AXIS

┌──────────────┐      ┌──────────────────────┐
│ SEND RADIO   │─────▶│ RECEIVE RADIO SIGNAL │────▶  T_rw
│ SIGNAL       │      │ AND RECORD ARRIVAL   │
│              │      │ TIME                 │
└──────────────┘      └──────────────────────┘                t_ps
       │                         │
       ▼                         ▼                      T_ts
┌──────────────┐      ┌──────────────────────┐
│ SEND AUDIO   │─────▶│ RECEIVE AUDIO SIGNAL │                  t_s
│ SIGNAL       │      │ AND REORD ARRIVAL    │
│              │      │ TIME                 │────▶  T_rs
└──────────────┘      └──────────────────────┘
                                 │
                                 ▼
              ┌──────────────────────┐
     S223 ────│ CALCULATE            │
              │ TIME DELAY OF        │
              │ AUDIO SIGNAL         │
              └──────────────────────┘
                                 │
                                 ▼
              ┌──────────────────────┐
     S224 ────│ OBTAIN SENDING TIME  │
              │ OF AUDIO SIGNAL      │
              └──────────────────────┘
                                 │
                                 ▼
              ┌──────────────────────┐
     S225 ────│ CALCULATE            │
              │ PROPAGATION TIME     │
              │ OF AUDIO SIGNAL      │
              └──────────────────────┘
                                 │
                                 ▼
              ┌──────────────────────┐
     S23 ─────│ CALCULATE DISTANCE   │
              │ BETWEEN NODES        │
              └──────────────────────┘
```

EP 2 975 425 B1

# FIG.11

S241

OBTAIN $\theta_{tr}$, $\alpha_{mi}$, and $\alpha_{si}$

S242

NO — $\alpha_{mi} = \alpha_{si}$? — YES

f' NEEDS COMPENSATION          f' IS USED TO DECODE

S243 — $\theta_{tr} = \sim \alpha_{mi}$          S244 — $\theta_{tr} = \alpha_{mi}$

DEPART EACH OTHER          APPROACH EACH OTHER

OBTAIN COMPENSATED FREQUENCY: $f_o$          OBTAIN COMPENSATED FREQUENCY: $f_i$

# FIG.12

$\alpha_{mi}$   MASTER NODE

N

SLAVE NODE

$\alpha_{si}$ + $\theta_{ms}$

DEPART-EACH-OTHER          APPROACH-EACH-OTHER          SLAVE-CHASING-MASTER          MASTER-CHASING-SLAVE

# FIG.13

S241'

COLLECT SIGNALS AND
INERTIAL SENSOR DATA

S242'

CLASSIFY MOVEMENT

SAME-
DIRECTION

OPPOSITE-
DIRECTION

S243'

CONDUCT
ID DECODING
AND MATCHING

S244'

CALCULATE
DISTANCE AND CONDUCT
FURTHER CLASSIFICATION

DEPART-
EACH-OTHER

APPROACH-
EACH-OTHER

S245'

COMPENSATE
AND DECODE

S247'

COMPENSATE
AND DECODE

S246'

CONDUCT
ID MATCHING

S248'

CONDUCT
ID MATCHING

# FIG.14

| FIRST AUDIO SIGNAL | SECOND AUDIO SIGNAL | THIRD AUDIO SIGNAL |
|---|---|---|

SENDING NODE

$T_1$ | $T_2$ | $T_3$

RECEIPT NODE

RADIO SIGNAL

ID DATA
(FROM RADIO SIGNAL)

| 1 | 2 | 3 |

$f_1'$ | $f_2'$ | $f_3'$    RECEIPT FREQUENCY

$t_1$ | $t_2$ | $t_3$    RECEIPT TIME

SENDING TIME

| $T_1$ | $T_2$ | $T_3$ |

EP 2 975 425 B1

FIG.15

```
                    ┌──────────────────────────────────┐
                    │ DOPPLER EFFECT BASED COMPENSATION │─── S24
                    └──────────────────────────────────┘
                                    │
                    ┌──────────────────────────────────┐
                    │ TOLERANCE BANDWIDTH: f' OR f_o~f' OR f'~f_i │─── S251
                    └──────────────────────────────────┘
```

CONDUCT ID DECODING

CONDUCT ID MATCHING ─── S252

MATCHED?

YES          NO

S22 — COMPENSATE TIME DELAY → S23 — CALCULATE DISTANCE

S26 — HANDLE CONFLICT

FIND
$$f_o \pm \frac{\text{bandwidth}}{N_{ID}} \times \frac{1}{2}$$

FIND
$$f' \pm \frac{\text{bandwidth}}{N_{ID}} \times \frac{1}{2}$$

FIND
$$f_i \pm \frac{\text{bandwidth}}{N_{ID}} \times \frac{1}{2}$$

$f_o$   $f'$   $f_i$

# FIG.16

EP 2 975 425 B1

```
                    CALCULATE D_s AND D_{σi}  ──S261

                                                    ──S262

  D_s≦N_ID & D_{σi}≦1    D_s≦N_ID & D_{σi}≧1    D_s≧N_ID & D_{σi}≦1    D_s≧N_ID & D_{σi}≧1
```

|  |  |  | ~S263 |
|---|---|---|---|
| CALCUALTE WAITING TIME $t_w = 0$ | CALCUALTE WAITING TIME $t_w = \dfrac{1}{f_j} \times N_{pulses}$ | CALCUALTE WAITING TIME $t_w = \dfrac{1}{f_{average}} \times N_{pulses} \times N_{ID}$ | CALCUALTE WAITING TIME $t_w = \dfrac{1}{f_{average}} \times N_{pulses} \times N_{ID} + \dfrac{1}{f_j} \times N_{pulses}$ |

```
                    AFTER WAITING t_w, SEND REQUEST  ──S264
```

# FIG.17

FIRST AUDIO SIGNAL    SECOND AUDIO SIGNAL    THIRD AUDIO SIGNAL

SENDING NODE

$T_1$  $T_2$  $T_3$

RECEIPT NODE

RADIO SIGNAL

$T_1$  $T_2$  $T_3$

$T_1$

$T_1$

$f_1'$  $f_2'$  $f_3'$  RECEIPT FREQUENCY

$t_1$  $t_2$  $t_3$  RECEIPT TIME

$t_1$

$t_1$

EP 2 975 425 B1

# FIG.18

# FIG.19

# FIG.20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6445344 B1

**Non-patent literature cited in the description**

- **DAMIEN KUBRAK et al.** Improvement of GNSS Signal Acquisition Using Low-cost Inertial Sensors. *ION GNNS 21st. International Technical Meeting of the Satellite Division,* 16 September 2008